# EUROPÄISCHE PATENTSCHRIFT

(11) **EP 3 200 261 B1**
(45) Veröffentlichungstag und Bekanntmachung des Hinweises auf die Patenterteilung: **28.11.2018**
(21) Anmeldenummer: 17000038.4
(22) Anmeldetag: 10.01.2017
(51) Int. Cl.: H01M 2/20, H01M 10/42, H01R 11/28

(54) **KONTAKTIERUNGSSYSTEM FÜR ENERGIESPEICHERZELLEN UND ENERGIESPEICHER**
CONTACTING SYSTEM FOR ENERGY STORAGE CELLS AND ENERGY STORAGE
SYSTÈME DE MISE EN CONTACT POUR DES ÉLÉMENTS D'ACCUMULATEUR D'ÉNERGIE ET ACCUMULATEUR D'ÉNERGIE

(30) Priorität: 27.01.2016 DE 102016000843
(43) Veröffentlichungstag der Anmeldung: 02.08.2017
(73) Patentinhaber: Diehl Metal Applications GmbH, 14167 Berlin (DE)
(72) Erfinder: Czechanowski, Paul, DE - 12207 Berlin (DE); Göldner, Alexander, DE - 10365 Berlin (DE)
(74) Vertreter: Diehl Patentabteilung

(56) Entgegenhaltungen:
- WO-A1-2015/177989
- WO-A1-2016/091689
- DE-A1-102011 087 040
- DE-A1-102013 207 356
- US-A1- 2013 147 463

## Beschreibung

Die zu Grunde liegende Erfindung betrifft insbesondere ein Kontaktierungssystem für Energiespeicherzellen, insbesondere Sekundärspeicherzellen, eines elektrischen Energiespeichers.

Derartige Kontaktierungssysteme kommen beispielsweise auf dem Gebiet der Elektromobilität zum Einsatz, und können bei der Herstellung von Traktionsbatterien für Elektrofahrzeuge, insbesondere Elektroautos, dazu verwendet, mehrere Batteriezellen der Traktionsbatterie miteinander in Reihe zu schalten.

Beispielhafte Kontaktierungssysteme sind aus der US20130147463 A1, EP 2 639 857 A1, der DE 10 2011 079 895 A1 oder der DE 10 2011 076 624 A1 bekannt. Die genannten Dokumente zeigen bzw. beschreiben jeweils spezifische Lösungen für Kontaktierungssysteme bei Traktionsbatterien, lassen im Hinblick auf Herstellungsaufwand, Montageaufwand und/oder Herstellungskosten jedoch durchaus Potential für Verbesserungen.

Insoweit kann es als eine Aufgabe der Erfindung angesehen werden, ein Kontaktierungssystem für Energiespeicherzellen, insbesondere für Traktionsbatterien, sowie einen Energiespeicher, insbesondere eine Traktionsbatterie, anzugeben, mit welchem/welcher insbesondere ein verringerter Herstellungsaufwand, Montageaufwand und/oder verringerte Herstellungskosten erreicht werden kann/können. Ferner soll ein Kontaktierungssystem bzw. ein Energiespeicher angegeben werden, welches/welcher beispielsweise eine zuverlässige Kontaktierung und/oder einen zuverlässigen Betrieb des Energiespeichers ermöglicht bzw. ermöglichen.

Diese Aufgabe wird insbesondere gelöst durch die Merkmale der unabhängigen Patentansprüche. Ausgestaltungen zur Lösung dieser Aufgabe ergeben sich insbesondere aus den abhängigen Patentansprüchen sowie aus der nachfolgenden Beschreibung.

In einer Ausgestaltung der Erfindung gemäß Patentanspruch 1 ist ein Kontaktierungssystem zur elektrischen Verschaltung mehrerer Energiespeicherzellen eines elektrischen, beispielsweise elektrochemischen, Energiespeichers vorgesehen. Bei den Speicherzellen kann es sich beispielsweise um Sekundärbatterien bzw. Sekundärbatteriezellen handeln. Der Energiespeicher kann beispielsweise als Traktionsbatterie für Elektrofahrzeuge, insbesondere Elektroautos, ausgebildet bzw. eingerichtet sein.

Entsprechend der Ausgestaltung nach Patentanspruch 1 kann ein entsprechendes Kontaktierungssystem mehrere, zur elektrischen Verschaltung jeweils zumindest zweier Zellpole der Energiespeicherzellen ausgebildete Zellpolverbinder umfassen.

Beispielsweise kann das Kontaktierungssystem derart ausgebildet sein, dass die Energiespeicherzellen des Energiespeichers durch die Zellpolverbinder in Reihe geschaltet werden bzw. sind. Die Zellpolverbinder können derart ausgebildet und angeordnet sein, dass jeder Zellpolverbinder jeweils insbesondere zwei, zu verschiedenen Energiespeicherzellen gehörende Zellpole entgegengesetzter Polarität verbindet. Jedoch ist es auch möglich, dass ein, mehrere, insbesondere alle, der Zellpolverbinder zur Parallelschaltung von zwei oder mehreren Energiespeicherzellen ausgebildet bzw. eingesetzt sind.

Gemäß der Ausgestaltung nach Patentanspruch 1 weist jeder zur Verschaltung zweier Zellpole ausgebildete Zellpolverbinder jeweils zumindest zwei Zellpolkontaktelemente bzw. Zellpolkontaktabschnitte auf.

Unter einem Zellpolkontaktelement soll insbesondere ein Abschnitt oder Element eines Zellpolverbinders verstanden werden, welcher/s dazu ausgebildet und eingerichtet ist, mit einem Zellpol einer Energiespeicherzelle, insbesondere unmittelbar, beispielsweise durch Löten und/oder Schweißen und/oder eine mechanische Verbindung, verbunden zu werden.

Zumindest einer der Zellpolverbinder umfasst zumindest ein Platinenkontaktelement, welches ausgebildet und eingerichtet ist zur Kontaktierung einer elektronischen Schaltung.

Bei der elektronischen Schaltung kann es sich beispielsweise um eine auf einer Schaltungsplatine ausgebildete elektronische Schaltung zur Steuerung und/oder Überwachung der Ladung/Entladung und/oder zur Überwachung von Betriebszuständen und/oder des Betriebs und/oder von Betriebsparametern der Energiespeicherzelle/n bzw. des gesamten Energiespeichers handeln.

In Ausgestaltungen können alle Zellpolverbinder, insbesondere diejenigen Zellpolverbinder, welche jeweils zwei Zellpole elektrisch miteinander verbinden, jeweils zumindest ein Platinenkontaktelement umfassen, so dass eine Steuerung, Ansteuerung und/oder Überwachung des jeweiligen Zellpols bzw. Zellpolpaars über das Platinenkontaktelement möglich ist. In Varianten ist es möglich, dass jedes Zellpolkontaktelement eines Zellpolverbinders ein Platinenkontaktelement umfasst, so dass beispielsweise jeder mit einem entsprechenden Zellpolkontaktelement verbundene Zellpol mit der/einer Schaltung zur Steuerung und/oder Überwachung usw. verbunden werden kann. Jedem Zellpol kann z.B. eine separate Schaltung zugeordnet sein.

Das Platinenkontaktelement, ist mit einem, beispielsweise genau einem, der Zellpolkontaktelemente des Zellpolverbinders über einen Kontaktierungssteg elektrisch leitend verbunden. Insbesondere kann das Platinenkontaktelement über einen sich zumindest teilweise zwischen Platinenkontaktelement und Zellpolverbinder erstreckenden Kontaktierungssteg mit dem/den Zellpolkontaktelement/en elektrisch leitend verbunden sein.

Der Kontaktierungssteg und/oder das Platinenkontaktelement kann/können beispielsweise flachprofiliert ausgebildet sein, und insbesondere aus einem flachprofilierten Halbzeug, insbesondere einem Flacherzeugnis, hergestellt sein. Der Kontaktierungssteg kann z.B. bandartig, und das Platinenkontaktelement kann z.B. als flächiges Plättchen ausgebildet sein. Abgesehen davon kann bzw. können auch die Zellpolkontaktelemente aus einem flachprofilierten Halbzeug, insbesondere einem Flacherzeugnis, beispielsweise durch Stanzen und/oder Umformen, hergestellt sein.

Der Kontaktierungssteg gemäß der Ausgestaltung nach Patentanspruch 1 umfasst zumindest ein schräg zu einer Zellpolkontaktierungsebene des Zellpolkontaktelements verlaufendes Stegsegment.

Der schräge Verlauf kann beispielsweise entsprechend eines vorgegebenen Neigungswinkels erfolgen. Der Neigungswinkel kann beispielsweise definiert sein zwischen einer Längsachse des Stegsegments und dem in Richtung des Stegsegments verlaufenden Normalenvektor der Zellpolkontaktierungsebene.

Das schräg verlaufende Stegsegment kann in Ausgestaltungen beispielsweise derart eingerichtet und ausgerichtet sein, dass die Längsachse des Stegsegments um einen spitzen Winkel, d.h. um einen Winkel kleiner als 90 Grad, gegenüber dem Normalenvektor der Zellpolkontaktierungsebene geneigt ist. Der spitze Winkel kann beispielsweise im Bereich von 20 bis 80 Grad, im Bereich von 30 bis 60 Grad, oder bei weniger als oder bei etwa 45 Grad liegen. Insbesondere derartige Winkel haben sich im Hinblick auf Kompensation von Zug-, Druck-, und/oder Torsionsbeanspruchungen zwischen Zellpolkontaktelement und Platinenkontaktelement als besonders vorteilhaft erwiesen, insbesondere für die bei Traktionsbatterien während des Betriebs gewöhnlich auftretenden Betriebsbelastungen.

Das Stegsegment des Kontaktierungsstegs kann, wie beschrieben, derart ausgebildet und ausgerichtet sein, dass dieses, oder dessen Verlängerung in Längsrichtung, eine durch das Zellpolkontaktelement, insbesondere eine durch eine Zellpolkontaktierungsfläche des Zellpolkontaktelements, definierte Zellpolkontaktierungsebene, unter einem stumpfen Winkel schneidet und insoweit gemäß der obigen Beschreibung schräg zur Zellpolkontaktierungsebene verläuft. Ein schräger Verlauf soll insbesondere bedeuten, dass das Stegsegment weder gänzlich parallel noch gänzlich senkrecht zur Zellpolkontaktierungsebene verläuft.

Im Rahmen dieser Erfindung soll unter dem Begriff "Zellpolkontaktierungsfläche" eines Zellpolkontaktelements insbesondere eine Kontaktfläche verstanden werden, welche bei ordnungsgemäßer Kontaktierung mit einem Zellpol elektrisch kontaktiert ist, bzw. über welche eine, insbesondere unmittelbare elektrische, Kontaktierung mit einem Zellpol hergestellt ist bzw. werden kann. Eine Zellpolkontaktierungsfläche kann beispielsweise auf einer entsprechenden Gegenfläche des Zellpols aufliegen und mit dieser elektrisch verbunden sein.

Unter dem Begriff "Platinenkontaktelement" soll im Rahmen der hierin beschriebenen Erfindung insbesondere ein Kontaktelement verstanden werden, welches ermöglicht, dass das jeweilige Zellpolkontaktelement mit einem elektrischen Kontakt oder Kontaktelement einer Überwachungs- und/oder Steuerungsplatine elektrisch leitend verbunden werden kann, wobei die Platine mit dem Kontaktierungssystem verbunden, bzw. Bestandteil desselben sein kann.

Die Platine kann insbesondere integriert, d.h. über die Platinenkontaktelemente fest verlötet, mit dem Kontaktierungssystem verbunden sein.

Ferner kann die Platine mit dem Tragrahmen durch, insbesondere kraft- oder formschlüssige, Verbindungselemente mechanisch verbunden sein.

Der Begriff "integriert" soll insbesondere bedeuten, dass das Zellkontaktierungssystem einschließlich der Platine als einheitliches Bauteil dem Herstellungsprozess für einen Energiespeicher, beispielsweise einer Traktionsbatterie, zur Verfügung gestellt werden kann bzw. im Herstellungsprozess als einheitliches Bauteil verarbeitet bzw. verwendet werden kann.

Insbesondere kann die Platine mit den Zellpolverbindern elektrisch leitend verbunden sein, indem elektrische Kontakte der Platine, d.h. indem Platinenkontakte, mit korrespondierenden, insbesondere deckungsgleich angeordneten, Platinenkontaktelementen elektrisch miteinander verbunden sind.

Zusätzlich zur elektrischen Integration der Platine, kann diese, wie erwähnt, des Weiteren durch mechanische Kontaktelemente, d.h. Befestigungselemente, mit dem Tragrahmen mechanisch verbunden sein.

Elektrische Kontakte zwischen Zellpolen und Zellpolkontaktelementen bzw. zwischen entsprechenden Kontaktflächen, bzw. zwischen Platinenkontaktelement und elektrischen Kontakten der Platine, d.h. Platinenkontakten, bzw. entsprechenden Kontaktflächen, können beispielsweise durch stoffschlüssige und/oder kraftschlüssige Verbindungen wie Löten, Schweißen usw. hergestellt, zumindest jedoch darauf basierend ausgebildet sein.

Unter einer Kontaktierungsebene soll im Rahmen der hierin beschriebenen Erfindung insbesondere eine Ebene verstanden werden, welche definiert ist durch eine zugeordnete Kontaktierungsfläche, welche zum Zwecke der elektrischen Kontaktierung einer weiteren Kontaktierungsfläche oder mit einem Kontaktelement ausgebildet oder vorgesehen ist.

Der Kontaktierungssteg kann beispielsweise als ein, z.B. im Querschnitt flach ausgebildetes, Kontaktband umgesetzt sein, wobei deren quer zur Längsachse gemessene Breite, d.h. die quer zur Erstreckung in Richtung vom Zellpolkontaktelement zum Platinenkontaktelement gemessene Breite, kleiner ist als eine in einer entsprechenden, parallelen Richtung gemessene Breite des Zellpolkontaktelements und/oder des Platinenkontaktelements. Auf diese Weise kann einerseits durch die vergrößerte Breite des Platinenkontaktelements erreicht werden, dass diese vergleichsweise einfach elektrisch kontaktiert werden kann, und eine Positionierung relativ zu elektrischen Kontakten der Platine, d.h. relativ zu den Platinenkontakten, vergleichsweise einfach ist. Andererseits kann durch die verringerte Breite des Kontaktierungsstegs erreicht werden, dass der Kontaktierungssteg ausreichend federnde bzw. federelastische Eigenschaften aufweist, durch welche beispielsweise ein ausreichender Ausgleich von Druck-, Zug-, und/oder Torsionsbeanspruchungen erreicht werden kann.

Der Kontaktierungssteg kann in Ausgestaltungen in dessen Längsrichtung eine oder mehrere, insbesondere zueinander entgegengesetzte Krümmungen oder Biegungen aufweisen, und kann beispielsweise einen gewellten und/oder mäanderartigen Verlauf aufweisen. Der Kontaktierungssteg kann insbesondere derart ausgebildet sein, dass das Platinenkontaktelement bei Zug-, Biege- oder Torsionsbeanspruchungen relativ zum Zellpolkontaktelement federelastisch bewegbar und/oder verwindbar ist, um so insbesondere Relativbewegungen und/oder (Maß-)Toleranzen ausgleichen zu können.

Es zeigt sich insbesondere, dass durch das vorgeschlagene Stegsegment des Kontaktierungsstegs einerseits eine federelastische elektrische Anbindung des Platinenkontaktelements am Zellpolkontaktelement möglich ist, so dass beim Betrieb und/oder bei der Montage eines entsprechenden Energiespeichers ggf. auftretende mechanische Spannungs- , Verspannungs- und/oder Verwindungsbeanspruchungen ausgeglichen werden können. Ferner kann, wie auch weiter unten noch genauer beschrieben wird, das Stegsegment andererseits auch dazu verwendet werden, die über die Platinenkontaktelemente zu kontaktierende Platine abzustützen und/oder zu positionieren, wobei das Stegsegment beispielsweise als eine Art Anschlag und/oder Auflager für die Platine ausgebildet sein kann.

Es zeigt sich mithin, dass durch den vorgeschlagenen Aufbau einerseits ein sicherer Betrieb eines entsprechenden Energiespeichers, und andererseits eine vereinfachte Montage, zumindest im Hinblick auf die zu montierende und kontaktierende Platine des Kontaktierungssystems, erreicht werden können. Insbesondere soll in diesem Zusammenhang darauf hingewiesen werden, dass bei dem hierin vorgeschlagenen Kontaktierungssystem eine zugeordnete Steuer- und/oder Überwachungsplatine, d.h. eine Platine mit einer darauf implementierten Steuer- und/oder Überwachungselektronik, vergleichsweise einfach integriert werden kann. Die Platine kann im fertig hergestellten Kontaktierungssystem, insbesondere im Hinblick auf die elektrische und/oder mechanische Anbindung, integraler Bestandteil sein, so dass die Montage des gesamten Kontaktierungssystems an Energiespeicherzellen in vergleichsweise einfacher Weise durchgeführt werden kann.

In Ausgestaltungen kann vorgesehen sein, dass das Platinenkontaktelement plättchenförmig ausgebildet ist, wobei das Platinenkontaktelement beispielsweise eine ebene, planare, oder gekrümmte, insbesondere konische Geometrie oder Form aufweisen kann. In Varianten kann das Platinenkontaktelement eine rechteckige, quadratische oder ovale Platinenkontaktierungsfläche bzw. Grundfläche aufweisen.

In Ausgestaltungen kann das Platinenkontaktelement, insbesondere die oder eine Platinenkontaktierungsfläche des Platinenkontaktelements, zumindest teilweise bzw. abschnittsweise von der Zellpolkontaktierungsebene, insbesondere mit einem vorgegebenen Abstand, beabstandet sein.

Zumindest ein Abschnitt des Platinenkontaktelements kann derart ausgebildet und angeordnet sein, dass dieser von der Zellpolkontaktierungsebene, insbesondere mit einem vorgegebenen Abstand, beabstandet ist.

Insbesondere kann das Platinenkontaktelement derart ausgebildet und eingerichtet sein, dass dieses im Wesentlichen parallel, insbesondere echt parallel, zur Zellpolkontaktierungsebene ausgerichtet bzw. gelegen ist. Beispielsweise kann das Platinenkontaktelement auf einem von der Zellpolkontaktebene der Zellpole der Energiezellen beabstandeten, insbesondere einem in Richtung der Normalen der Zellpolkontaktebene beabstandeten, Niveau liegen.

Durch eine geeignete Anordnung und Ausbildung der Kontaktebenen kann u.U. eine vergleichswiese kompakte Bauweise erreicht werden. Beispielsweise können bei ausreichend vorgegebener Beabstandung der Platinenkontaktebene von der Zellpolkontaktebene auf der Platine befindliche elektronische Bauelemente auf einer dem Platinenkontaktelement zugewandten Seite angeordnet sein, so dass die Bauelemente in einem zwischen Platine und Energiespeicherzellen ausgebildeten Zwischenraum liegend angeordnet, und, von außen betrachtet, durch Platine überdeckt werden können.

In Ausgestaltungen kann vorgesehen sein, dass das Platinenkontaktelement und der Kontaktierungssteg, zumindest jedoch wesentliche Teile davon, an einer von einer Zellpolkontaktierungsfläche des Zellpolkontaktelements abgewandten Seite ausgebildet sind, oder sich in Richtung dieser Seite erstrecken. Die genannte Seite kann bei einem fertig montierten Energiespeicher, beispielsweise in Form einer Traktionsbatterie, z.B. die Oberseite ausbilden, wobei die Platinenkontaktelemente derart ausgebildet sein können, dass die zu kontaktierende und montierende Platine an der Oberseite gelegen ist. Insbesondere kann mit einer derartigen Anordnung eine vergleichsweise einfache Herstellung erreicht werden, indem z.B. die Platine von der Oberseite her auf die, beispielsweise in einem Halterahmen positionierten, Platinenkontaktelemente gesetzt und mit diesen verbunden wird, und das Kontaktierungssystem mit den an der Unterseite gelegenen Zellpolkontaktierungsflächen der Zellpolkontaktelemente auf die Zellpole der Energiespeicherzellen gesetzt wird.

In weiteren Ausgestaltungen kann vorgesehen sein, dass das Platinenkontaktelement und der Kontaktierungssteg, bzw. zumindest ein Teil des Kontaktierungsstegs und/oder des Platinenkontaktelements, in Draufsicht, d.h. in Draufsicht bezüglich der Zellpolkontaktierungsebene, betrachtet außerhalb des Zellpolkontaktelements verlaufen. Mit anderen Worten bedeutet das, dass sich in Projektion bezüglich der Zellpolkontaktierungsebene betrachtet, der Kontaktierungssteg und/oder das Platinenkontaktelement allenfalls teilweise, in Ausgestaltungen gar nicht, überlappen. Insbesondere in solchen Ausgestaltungen kann erreicht werden, dass die an oder mit den Platinenkontaktelementen zu verbindende Platine in lateraler Richtung ausreichend weit von den Zellpolkontaktelementen entfernt ist, so dass das jeweilige Zellpolkontaktelement gut zugänglich angeordnet ist, um dieses beispielsweise in einem jeweiligen Schweiß- oder Lötvorgang vergleichsweise einfach mit einem zugeordneten Zellpol verbinden zu können, und/oder um die Platine beim Löt- und/oder Schweißvorgang vor abträglicher, beim Verbindungsvorgang entstehender thermischer Belastung zu schützen.

In Ausgestaltungen kann vorgesehen sein, dass sich der Kontaktierungssteg und das damit verbundene Platinenkontaktelement in einer Richtung quer, insbesondere senkrecht, zur Verbindungslinie zweier benachbarter Zellpolkontaktelemente, insbesondere quer bzw. senkrecht zur Verbindungslinie der Flächenschwerpunkte zweier benachbarter Zellpolkontaktelemente des jeweiligen Zellpolverbinders erstrecken. Eine Orientierung des Kontaktierungsstegs und des damit endseitig verbundenen Platinenkontaktelements, bzw. des sich vom Kontaktierungssteg endseitig erstreckenden Platinenkontaktelements, in eine Richtung quer zur genannten Verbindungslinie, entlang derer oder parallel zu welcher beispielsweise die zu verbindenden Zellpole angeordnet sein können, ermöglicht insbesondere einen vorteilhaften Aufbau des Kontaktierungssystems. Ferner kann durch die vorgeschlagene Anordnung beispielsweise vermieden werden, dass bei der Herstellung der elektrischen Verbindungen, z.B. durch Löten oder Schweißen, benachbarte Kontaktelemente oder bereits hergestellte elektrische Kontakte über Maßen mit thermischer Energie beaufschlagt werden.

In Ausgestaltungen kann vorgesehen sein, dass der Kontaktierungssteg einstückig mit zumindest einem Zellpolkontaktelement des jeweiligen Zellpolverbinders ausgebildet ist. In weiteren Ausgestaltungen kann der Kontaktierungssteg einstückig mit dem jeweiligen Platinenkontaktelement ausgebildet sein. Insbesondere können ein jeweiliges Zellpolkontaktelement, bzw. der Zellpolverbinder, der jeweils zugeordnete Kontaktierungssteg, sowie das jeweilige Platinenkontaktelement in einstückiger, insbesondere integrierter, Bauart ausgeführt sein. Beispielsweise können die genannten drei Komponenten, d.h. Kontaktierungssteg, Platinenkontaktelement und Zellpolkontaktelement aus einem Flacherzeugnis, insbesondere Blech, in einstückiger Bauweise hergestellt, z.B. herausgestanzt, sein.

Die Form des Kontaktierungsstegs, insbesondere der Verlauf des schräg zur Zellpolkontaktierungsebene verlaufenden Stegabschnitts, und/oder die endgültige Form des Zellpolverbinders kann z.B. in einem Umformschritt hergestellt bzw. erzeugt werden.

Durch eine einstückige Ausbildung des Zellpolverbinders kann insbesondere die Anzahl der jeweils erforderlichen und herzustellenden elektrischen Verbindungen, beispielsweise Löt- oder Schweißverbindungen, reduziert werden, wodurch beispielsweise der Herstellungsaufwand verringert und die Funktionszuverlässigkeit des Kontaktierungssystems verbessert werden können.

In Ausgestaltungen kann der Kontaktierungssteg zwei oder mehr, d.h. zumindest zwei, schräg zur Zellpolkontaktierungsebene, beispielsweise etwa parallel zueinander ausgerichtete bzw. verlaufende, Stegsegmente umfassen oder aufweisen. Die beiden Stegsegmente können in Schnitten senkrecht zur Zellpolkontaktierungsebene beispielsweise ein U-förmiges Profil aufweisen, ausbilden oder Bestandteil eines solchen sein. Im Falle eines U-förmigen Profils kann der Boden des Profils beispielsweise gerade oder gekrümmt, insbesondere gewellt, ausgebildet sein. Die schräg zur Zellpolkontaktierungsebene verlaufenden Stegsegmente können beispielsweise die Schenkel des U-förmigen Profils ausbilden, und können über einen geraden oder gekrümmten, insbesondere gewellten Boden miteinander verbunden sein. Eine solche Geometrie des Kontaktierungsstegs ist insbesondere von Vorteil für einen ausreichenden Ausgleich von Zug- oder Druckspannungen und/oder Torsionsbeanspruchungen, die zwischen Platinenkontaktelement und Zellpolkontaktelement im montierten Zustand während des Gebrauchs eines entsprechenden Energiespeichers auftreten können.

In weiteren Ausgestaltungen kann der Kontaktierungssteg beispielsweise wellenförmig ausgebildet sein, mit z.B. zumindest einem Wellenberg und/oder zumindest einem Wellental.

Das Stegsegment kann im Wesentlichen S-förmig ausgebildet sein oder einen entsprechenden S-förmigen Abschnitt aufweisen oder Bestandteil eines solchen sein. Insbesondere mit den vorweg beschriebenen, jedoch auch mit den weiteren hierin beschriebenen Ausgestaltungen des Kontaktierungsstegs können mechanische Beanspruchungen wie Zug-, Druck-, und/oder Torsionsbelastungen, die beispielsweise gleichermaßen in mehreren Dimensionen auftreten können, in vorteilhafter Weise ausgeglichen werden, so dass mechanische Belastungen und Beeinträchtigungen zwischen Zellpolen und Zellpolkontaktierungselementen und/oder zwischen Platinenkontaktelementen und den Kontaktelementen der Platine, d.h. zwischen Platine und Zellpolkontaktelementen, ausgebildete elektrische Verbindungen, beispielsweise Löt- oder Schweißverbindungen, zumindest weitgehend kompensiert bzw. ausgeglichen oder abgefangen werden können.

In Ausgestaltungen kann das zumindest eine Stegsegment, insbesondere in Schnitten senkrecht zur Zellpolkontaktierungsebene, einen im Wesentlichen geradlinigen Verlauf aufweisen, und/oder das zumindest eine Stegsegment kann Bestandteil eines S-förmig gekrümmten oder gewellten Stegabschnitts des Kontaktierungsstegs sein. Beispielsweise kann das Stegsegment an beiderseitigen längsseitigen Enden mit gegenläufig gekrümmten Übergangsabschnitten verbunden sein. Ein entsprechend ausgebildeter Kontaktierungssteg hat sich insbesondere im Hinblick auf die Kompensation von Torsions-, Zug- oder Druckspannungen als besonders vorteilhaft erwiesen.

In Ausgestaltungen kann das Kontaktierungssystem derart ausgebildet sein, dass zwei, insbesondere benachbarte, Zellpolkontaktelemente zumindest eines Zellpolverbinders, optional oder bevorzugt aller Zellpolverbinder des Kontaktierungssystems, in jeweils einstückiger Ausbildung über einen zum Ausgleich von Zug- und/oder Biege- und/oder Torsionsbeanspruchungen des Zellpolverbinders ausgebildeten Wellenabschnitt miteinander verbunden sind. Mit anderen Worten kann der Übergang zwischen den Zellpolkontaktelementen wellenförmig, mit zumindest einer Welle, ausgebildet sein. Zumindest ein Zellpolverbinder, vorzugsweise alle Zellpolverbinder, können so eingerichtet sein, dass dieser/s in einstückiger Ausbildung jeweils zwei Zellpolkontaktelemente und einen die Zellpolkontaktelemente verbindenden Wellenabschnitt umfasst.

Der Wellenabschnitt kann in Ausgestaltungen beispielsweise zumindest einen Wellenberg und/oder zumindest ein Wellental umfassen. Der Wellenabschnitt kann in Ausgestaltungen derart geformt sein, dass dieser im Wesentlichen vollständig auf einer von den Zellpolkontaktierungsflächen der Zellpolkontaktelemente abgewandten Seite des Zellpolverbinders ausgebildet ist. Insbesondere auf diese Weise können die Zellpolverbinder ungehindert auf die Zellpole aufgelegt und mit diesen verbunden werden.

In Ausgestaltungen kann vorgesehen sein, dass Zellpolkontaktierungsflächen oder korrespondierende Zellpolkontaktierungsebenen der Zellpolkontaktelemente zumindest eines Zellpolverbinders, optional aller Zellpolverbinder, in einer gemeinsamen Zellpolkontaktierungsebene gelegen sind. Mit anderen Worten können die Zellpolkontaktelemente derart ausgebildet sein, dass deren Zellpolkontaktierungsflächen, d.h. diejenigen Flächen, die mit den Zellpolen elektrisch verbunden werden/sind, im Wesentlichen in einer Ebene, d.h. koplanar, liegen.

Insbesondere die hierin vorgeschlagenen Anordnungen können umgesetzt werden, wenn z.B. alle Zellpolkontaktelemente des Kontaktierungssystems, welche z.B. zwei Zellpole miteinander in Reihe verbinden, gleiche Geometrie aufweisen.

In Ausgestaltungen kann vorgesehen sein, dass Platinenkontaktierungsflächen, d.h. insbesondere elektrische Kontaktflächen der Platinenkontaktelemente, welche mit korrespondierenden elektrischen Kontaktflächen einer Platine elektrisch leitend verbunden werden können bzw. sind, von zumindest zwei Platinenkontaktelementen in einer gemeinsamen Platinenkontaktierungsebene gelegen sind.

Insbesondere können die Platinenkontaktierungsflächen aller Platinenkontaktelemente, in einer gemeinsamen Platinenkontaktierungsebene gelegen sein. Auf diese Weise kann beispielsweise eine vergleichsweise einfache Anbindung und Kontaktierung der Platine erreicht werden.

In Ausgestaltungen können die Zellpolkontaktierungsebene und die Platinenkontaktierungsebene, bzw. korrespondierende Flächen, echt parallel zueinander verlaufen. Durch eine, insbesondere wie beschrieben, ausgebildete Anordnung der Kontaktierungsebenen zueinander können insbesondere Vorteile im Hinblick auf die Herstellung der elektrischen Kontakte zwischen miteinander zu kontaktierenden Flächen erreicht werden.

In Ausgestaltungen kann das Kontaktierungssystem derart ausgebildet sein, dass das Stegsegment eine, insbesondere dem jeweiligen Zellpolkontaktelement abgewandte, Anschlagfläche zur Anlage einer mit dem Platinenkontaktelement verbundenen Platine, beispielsweise einer Seitenkante der Platine, oder eines Halterahmens der Platine, oder einer anderen Komponente des Kontaktierungssystems aufweist. Das Stegsegment kann bei solchen Ausgestaltungen als Montagehilfe und/oder als Positionier- und/oder Halteelement oder -hilfe verwendet werden, wobei gleichzeitig ein zufriedenstellender Ausgleich von mechanischen Zug-, Druck- und/oder Torsionsspannungen möglich ist.

In Ausgestaltungen kann das Stegsegment zumindest an einer vom jeweiligen Zellpolkontaktelement abgewandten Seite zumindest ein Rastelement zur Verrastung einer bzw. der mit dem Platinenkontaktelement verbundenen Platine umfassen. Das Rastelement kann beispielsweise derart ausgebildet und eingerichtet sein, dass dessen Rastwirkung in einer Richtung parallel zum Stegsegment erfolgt. Mithin kann das Stegsegment als Montagehilfe und/oder zur Befestigung der Platine verwendet werden. Die Rastwirkung bzw. das Rastelement kann beispielsweise derart ausgebildet sein, dass die Platine, genauer das elektrische Kontaktelement der Platine in Richtung und auf das Platinenkontaktelement gedrückt wird.

In Ausgestaltungen kann vorgesehen sein, dass das Platinenkontaktelement und/oder das Stegsegment als Tragelement/e für eine bzw. die mit dem Platinenkontaktelement verbundene Platine eingerichtet und ausgebildet sind. Insbesondere können die genannten Bestandteile dazu verwendet werden, die Platine zu positionieren und/oder zu haltern.

In Ausgestaltungen kann der Zellpolverbinder mehrlagig ausgebildet sein, und beispielsweise zumindest zwei, insbesondere im Wesentlichen parallele bzw. parallel ausgerichtete, Materiallagen umfassen. Entsprechend können die Zellpolkontaktelemente des Zellpolverbinders mehrlagig ausgebildet sein, und entsprechend zumindest zwei Materiallagen umfassen. Die Materiallagen können z.B. unmittelbar aneinander anliegen.

In Ausgestaltungen, insbesondere mit mehrlagiger Ausbildung von Zellpolverbinder bzw. Zellpolkontaktelement, kann der Kontaktierungssteg mit derjenigen Materiallage, z.B. einstückig, verbunden sein, welche bei ordnungsgemäßer elektrischer Verbindung des Zellpolverbinders mit den Zellpolen der Energiespeicherzellen unmittelbar verbunden ist. Insbesondere kann der Kontaktierungssteg an derjenigen Materiallage ausgebildet sein, welche unmittelbar auf den Kontaktflächen der Zellpole aufliegt. Die entsprechende Materiallage kann beispielsweise die Zellpolkontaktierungsfläche umfassen bzw. diese definieren.

Durch Ausbildung des Kontaktierungsstegs an der unmittelbar mit dem Zellpol verbundenen Materiallage kann erreicht werden, dass Betriebsparameter der jeweiligen Zellpole bzw. miteinander verbundenen Zellpole zuverlässig erfasst werden können.

Ein mehrlagiger Aufbau kann insbesondere verwendet werden um die jeweils erforderliche Biege- und/oder Verwindungsfähigkeit bei gleichzeitiger, z.B. hoher, Spannungs- und Stromfestigkeit der Zellpolkontaktelemente zu erreichen. Mehrlagige Zellpolkontaktelemente können beispielsweise bei Kontaktierungssystemen für Energiespeicher im Hochvoltbereich von beispielsweise bis zu 400V verwendet werden. Solche Energiespeicher können beispielsweise im Bereich der Elektromobilität für Traktionsbatterien und dgl. verwendet werden.

Der Zellpolverbinder kann beispielsweise aus Kupfer, Aluminium, einer Legierung, insbesondere der genannten Metalle, oder einem Kompositmaterial umfassend mehrere Leitermaterialien, hergestellt sein. Sofern erforderlich kann der Zellpolverbinder zumindest an elektrischen Kontaktierungsflächen beschichtet sein, beispielsweise zur Verbesserung der Haltbarkeit und/oder Qualität und/oder AlterungsBeständigkeit von Löt- und/oder Schweißverbindungen usw.

In Ausgestaltungen des Kontaktierungssystems kann dieses des Weiteren einen Tragrahmen umfassen an welchem der zumindest eine Zellpolverbinder, und ggf. die Platine, mechanisch befestigt ist.

Der Tragrahmen kann beispielsweise aus einem Kunststoffmaterial oder einem Kunststoff-Metall-Komposit hergestellt sein, und kann z.B. einen äußeren Rahmen und einen inneren Rahmen, mit z.B. gitterartig angeordneten Stegen und dgl., zur Montage der Zellpolverbinder und/oder der Platine umfassen.

Der Zellpolverbinder kann in Ausgestaltungen eine zur Befestigung mit dem Tragrahmen ausgebildete Befestigungskomponente umfassen. Die Befestigungskomponente kann beispielsweise ausgebildet sein zur form- und/oder kraftschlüssigen Verbindung mit dem Tragrahmen.

Die Befestigungskomponente kann einstückig mit dem Zellpolverbinder und/oder zumindest einem Zellpolkontaktelement des Zellpolverbinders ausgebildet sein.

Die Befestigungskomponente kann als integrierter Bestandteil des Zellpolverbinders, insbesondere eines Zellpolkontaktelements, ausgebildet sein. In Varianten kann jedes der Zellpolkontaktelemente eines Zellpolverbinders zumindest eine Befestigungskomponente bzw. ein Befestigungselement umfassen.

Die Befestigungskomponente, bzw. das Befestigungselement kann in Ausgestaltungen zumindest ein, insbesondere senkrecht zur Zellpolkontaktierungsebene bzw. senkrecht zur Zellpolkontaktierungsfläche, ausgerichtetes Durchgangsloch aufweisen. Mittels des Durchgangslochs kann der Zellpolverbinder beispielsweise durch eine Nietverbindung und/oder eine Verstemmung, insbesondere bei einem aus Kunststoff hergestellten Tragrahmen, mit dem Tragrahmen verbunden sein.

Das Durchgangsloch bzw. die Befestigungskomponente können beispielsweise im Zellpolkontaktelement ausgebildet sein, insbesondere an oder in der Nähe einer dem Kontaktierungssteg zugewandten Seitenkante oder Eckkante des Zellpolkontaktierungselements.

Vorzugsweise ist die Befestigungskomponente, insbesondere das Durchgangsloch, derart angeordnet, dass diese im Übergangsbereich von Kontaktierungssteg und Zellpolkontaktelement einen vorgegebenen, insbesondere in Richtung der Längserstreckung des Kontaktierungsstegs betrachtet lateralen, Abstand zum Übergangsbereich aufweist, so dass trotz der Befestigungskomponente eine ausreichende mechanische Stabilität für das Zellpolkontaktelement erreicht werden kann und/oder trotz der Befestigungskomponente vorteilhafte Übergangswiderstände zwischen Zellpolkontaktelement und Kontaktierungssteg erreicht werden können.

In Ausgestaltungen kann der Zellpolverbinder an einer von der Befestigungskomponente, insbesondere dem Durchgangsloch, abgewandten Seite oder Seitenkante mittels zumindest eines am Tragrahmen ausgebildeten Rastelements, beispielsweise einer Rastlasche oder Rastnut, im Eingriff sein. Auf diese Weise können die Zellpolkontaktelemente z.B. in vergleichsweise einfacher Weise montiert werden, indem die Zellpolkontaktelemente zuerst in das Rastelement eingesetzt, und dann anhand der Befestigungskomponente fest, insbesondere integral, mit dem Tragrahmen verbunden werden.

In Ausgestaltungen kann der Tragrahmen für zumindest ein Platinenkontaktelement, bevorzugt für jedes Platinenkontaktelement, ein, d.h. zumindest ein, Stützelement, aufweisen. Das Stützelement kann beispielsweise zumindest einen Stützvorsprung umfassen, der vom Tragrahmen in Richtung des montierten Platinenkontaktelements vorspringt, und insoweit als eine Art Auflager für das Platinenkontaktelement und ggf. eine darauf montierte Platine wirken kann.

Insbesondere kann ein/das Stützelement derart ausgebildet sein, und das Platinenkontaktelement kann derart ausgerichtet und positioniert sein, dass das Platinenkontaktelement mit einer von der Platinenkontaktierungsfläche des Platinenkontaktelements abgewandten Seite auf dem Stützelement abgestützt ist bzw. aufliegt.

Beispielsweise kann das Platinenkontaktelement im montierten Zustand mit einer dem Tragrahmen zugewandten Fläche auf einem/dem Stützelement abgestützt sein, wobei die Platinenkontaktierungsfläche auf der vom Tragrahmen abgewandten Seite angeordnet bzw. ausgebildet sein kann.

Insbesondere bei Ausgestaltungen mit Stützelement ist es möglich, die Zellpolverbinder zunächst am Tragrahmen zu montieren, und sodann die Platine aufzusetzen so dass elektrische Kontaktflächen der Platine auf den Platinenkontaktierungsflächen aufliegen und in elektrischem Kontakt mit diesen sind. Bei den beschriebenen Ausgestaltungen kann beispielsweise für die Montage der Zellpolkontaktelemente und der Platine am Tragrahmen eine einheitliche Montagerichtung, beispielsweise etwa parallel zur Normalenrichtung der vom Tragrahmen aufgespannten Fläche, erreicht werden.

In Ausgestaltungen des Kontaktierungssystems kann vorgesehen sein, dass das Kontaktierungssystem zumindest eine Zellpolverbinderreihe umfasst, welche jeweils mehrere, parallel zu einer Längsachse des Kontaktierungssystems hintereinander gelegen angeordnete Zellpolverbinder aufweist. Die Zellpolverbinder einer Zellpolverbinderreihe können beispielsweise derart ausgerichtet sein, dass Verbindungslinien der Zellpolkontaktelemente der Zellpolverbinder jeweils parallel zur Längsachse der Zellpolverbinderreihe, insbesondere parallel zur Längsachse des Kontaktierungssystems, orientiert sind. Insbesondere in solchen Ausgestaltungen können mehrere Energiespeicherzellen beispielsweise einer Fahrzeugtraktionsbatterie in Reihe geschaltet werden.

In Ausgestaltungen können die Zellpolverbinder einer Zellpolverbinderreihe derart ausgerichtet sein, dass sich die aus Kontaktierungssteg und Platinenkontaktelement gebildete Einheit quer, insbesondere senkrecht zur Längsachse der Zellpolverbinderreihe und/oder des Kontaktierungssystems erstreckt.

In Ausgestaltungen können beispielsweise Zellpolverbinderreihen paarweise ausgebildet sein, wobei jedem Zellpolverbinderreihenpaar beispielsweise eine Steuer- und/oder Überwachungsplatine zugeordnet sein kann. Beispielsweise können die Zellpolverbinder eines Zellpolverbinderreihenpaars derart ausgerichtet sein, dass die Platinenkontaktelemente der einen Zellpolverbinderreihe den Platinenkontaktelementen der jeweils anderen Zellpolverbinderreihe zugewandt sind. Insbesondere bei einer solchen Anordnung und Ausrichtung der Platinenkontaktelemente kann die Platine zwischen den Zellpolverbinderreihen eines Zellpolverbinderreihenpaars angeordnet werden. Bei den genannten Ausgestaltungen kann insbesondere im Hinblick auf den mechanischen Aufbau und die elektrische Kontaktierung eine vergleichsweise kompakte Bauform erreicht werden.

Wie bereits erwähnt, kann das Kontaktierungssystem in Ausgestaltungen des Weiteren eine Platine, beispielsweise mit einer Steuer- und/oder Überwachungselektronik, aufweisen. Die Platine kann beispielsweise eine Mehrzahl an elektrischen Kontakten, d.h. an einem Platinengrundkörper angebrachte bzw. vorhandene Kontakte umfassen, die dazu vorgesehen sind, mit den Platinenkontaktelementen des Zellpolverbinders elektrisch verbunden zu werden. Die Anzahl der entsprechenden elektrischen Kontakte der Platine kann dabei der Anzahl der Platinenkontaktelemente der Zellpolverbinder entsprechen, wobei für jedes Platinenkontaktelement vorzugsweise genau ein elektrischer Kontakt auf der Platine, d.h. genau ein Platinenkontakt, vorgesehen ist. Jeder entsprechende elektrische Kontakt der Platine ist bevorzugt mit einem Platinenkontaktelement unmittelbar elektrisch leitend verbunden, beispielsweise mittels einer stoffschlüssigen Verbindung, insbesondere Lötverbindung.

In Ausgestaltungen kann, wie bereits angedeutet, vorgesehen sein, dass die Platine parallel zur Längsachse der Zellverbinderreihe und/oder des Kontaktierungssystems verläuft. Die Platine kann sich beispielsweise im Wesentlichen über die Längserstreckung der Zellverbinderreihen erstrecken. Ferner kann die Platine zwischen, insbesondere vollständig zwischen, zwei Zellpolverbinderreihen angeordnet bzw. positioniert sein, wobei der Platine zugewandte Platinenkontaktelemente mit korrespondierenden elektrischen Kontakten der Platine elektrisch kontaktiert sind. Die Kontakte der Platine, d.h. im Sinne der Anmeldung die Platinenkontakte, können randseitig an den Platinen, z.B. in Längsrichtung der Platine, hintereinander liegend, z.B. in einer Reihe, angeordnet sein. Insbesondere solche Ausgestaltungen ermöglichen insbesondere einen kompakten, beispielsweise flach bauenden, Aufbau des Kontaktierungssystems.

In Ausgestaltungen kann vorgesehen sein, dass die Platine mit zumindest einer längsseitigen Kante an die Stegsegmente der jeweiligen Kontaktierungsstege angeschlagen ist, und/oder dass die Platine anhand der mit den Platinenkontaktelementen verbundenen elektrischen Kontakte zumindest teilweise auf den Platinenkontaktelementen des Zellpolverbinders abgestützt ist.

Insbesondere wenn die Stegsegmente als Anschlagflächen und/oder die Platinenkontaktelemente neben ihrer elektrischen Kontaktierungsfunktion auch als Auflager für die Platine genutzt werden, kann ein vergleichswiese mechanisch stabiler Aufbau erreicht werden, wobei durch Positionierung der Platine an den Anschlagflächen und an Auflagern auch Vorteile im Hinblick auf die Montage erreicht werden können.

In Ausgestaltungen kann vorgesehen sein, dass an einem längsseitigen Ende des Kontaktierungssystems zumindest eine elektrische Schnittstelle ausgebildet, bzw. vorhanden ist. Die Schnittstelle kann beispielsweise zumindest ein Steckkontaktelement umfassen, beispielsweise zur Herstellung einer leistungsseitigen Verbindung oder zur Verbindung mit einer elektronischen Steuer- und/oder Überwachungsschaltung, z.B. der Platine.

Entsprechend kann die zumindest eine Schnittstelle zumindest einen Leistungs- und/oder Steuerabgriff umfassen, wobei die Schnittstelle derart ausgebildet sein kann, dass eine durch die Schnittstelle definierte Steckrichtung zur elektrisch leitenden Verbindung mit einem Gegensteckkontaktelement parallel zur Längsachse es Kontaktierungssystems verläuft.

Nach einer Ausgestaltung der Erfindung, beispielsweise gemäß Patentanspruch 9, wird ein Energiespeicher, insbesondere eine Traktionsbatterie für Elektrofahrzeuge, beispielsweise Elektroautos, vorgeschlagen.

Der vorgeschlagene Energiespeicher umfasst eine Mehrzahl an Energiespeicherzellen, bei welchen es sich beispielsweise bzw. bevorzugt um elektrochemische Speicherzellen, insbesondere Sekundärbatteriespeicherzellen, handeln kann. Die Energiespeicherzellen umfassen jeweils Zellpole entgegengesetzter Polarität.

Der Energiespeicher umfasst ferner zumindest ein Kontaktierungssystem entsprechend einer der hierin beschriebenen Ausgestaltungen nach der Erfindung, wobei die Zellpole zumindest einer Teilmenge der Energiespeicherzellen mittels der Zellpolverbinder des Kontaktierungssystems elektrisch verschaltet, insbesondere in Reihe geschaltet, sind.

Beispielsweise können n Speicherzellen mit einem Kontaktierungssystem unter Einsatz von n-1 Zellpolverbindern miteinander verbunden sein, wobei n eine natürliche Zahl größer 1 ist. Entsprechend eines konkreten Beispiels können 16 Speicherzellen mit 15 Zellpolverbindern in Reihe geschaltet sein. Nicht mit Zellpolverbindern verbundene, schaltungstechnisch endstellige Zellpole der Speicherzellen können beispielsweise als/für Leistungsabgriffe verwendet werden, oder mit entsprechenden Leistungsabgriffen verbunden sein.

In Ausgestaltungen des Energiespeichers können elektrische Kontaktflächen der mit einem Kontaktierungssystem verschalteten Zellpole in einer gemeinsamen Kontaktierungsebene gelegen sein. Ferner kann in Ausgestaltungen vorgesehen sein, dass Platinenkontaktierungsflächen der Platinenkontaktelemente in einer gemeinsamen Platinenkontaktierungsebene liegen. Insbesondere bei solchen Ausgestaltungen kann die Kontaktierungsebene der Zellpole beispielsweise echt parallel zur Platinenkontaktierungsebene gelegen sein, wobei die Platinenkontaktierungsebene beispielsweise in Richtung der Zellpolnormalen der Zellpole, insbesondere mit einem vorgegebenen Abstand, beabstandet zur Kontaktierungsebene der Zellpole gelegen sein kann.

Insbesondere die vorweg beschriebenen Ausgestaltungen ermöglichen einen vergleichsweise einfachen Zusammenbau des Energiespeichers, bzw. erlauben eine vergleichsweise einfache elektrische Kontaktierung der Zellpole und der Platinenkontakte.

In weiteren Ausgestaltungen des Kontaktierungssystems und des Energiespeichers kann vorgesehen sein, dass sämtliche Zellpolverbinder, die dazu vorgesehen sind mehrere, insbesondere zwei, Zellpole in Reihe zu schalten, gleiche Geometrie aufweisen. Insbesondere ist es damit möglich, zur Herstellung des Kontaktierungssystems eine einzige Art von Zellpolverbindern im Sinne der Erfindung zu verwenden, wodurch insbesondere Zeit- und Kostenvorteile bei Herstellung und Montage erreicht werden können.

Insgesamt zeigt sich, dass das hierin vorgeschlagene Kontaktierungssystem und der vorgeschlagene Energiespeicher und deren Ausgestaltungen die zu Grunde liegende Aufgabe lösen.

Ausführungsbeispiele der Erfindung werden nachfolgend anhand der anhängenden Figuren beschrieben. Es zeigen:
- FIG. 1: ein Ausführungsbeispiel eines Energiespeichers gemäß der Erfindung, umfassend ein nach einem Ausführungsbeispiel der Erfindung ausgebildetes Kontaktierungssystem;
- FIG. 2: einen Ausschnitt des Energiespeichers der FIG. 1 in teilweise aufgebrochener Darstellung;
- FIG. 3: das Kontaktierungssystem der FIG. 1 in Draufsicht;
- FIG. 4: das Kontaktierungssystem der FIG. 1 in Frontansicht;
- FIG. 5: eine perspektivische Darstellung eines Zellpolverbinders;
- FIG. 6: eine Seitenansicht des Zellpolverbinders der FIG. 5; und
- FIG. 7: eine Teilquerschnittsdarstellung entlang der Linie A-A der FIG. 3.

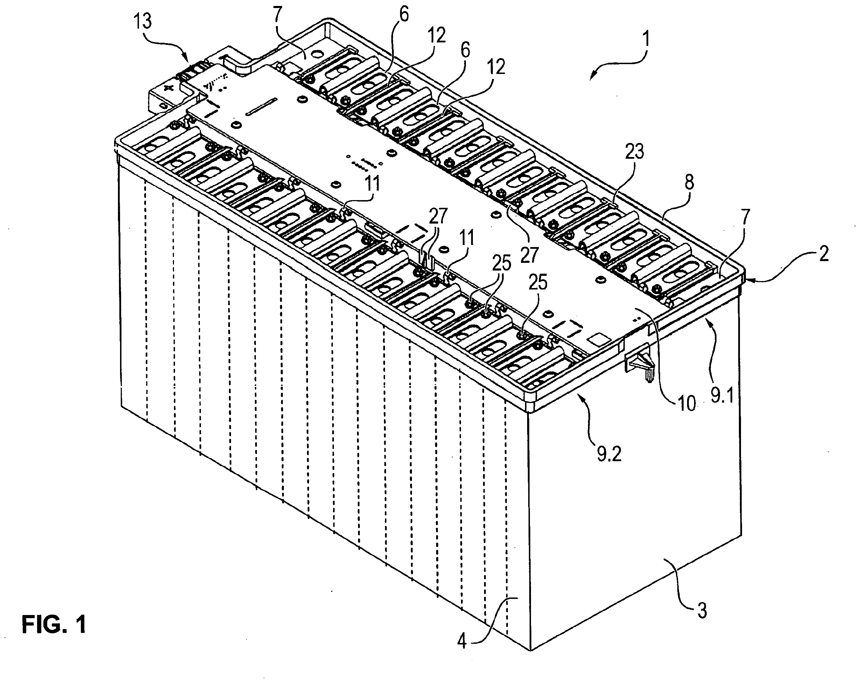

FIG. 1 zeigt ein Ausführungsbeispiel eines Energiespeichers 1 gemäß der Erfindung, umfassend ein nach einem Ausführungsbeispiel der Erfindung ausgebildetes Kontaktierungssystem 2.

Der Energiespeicher 1 umfasst in einem Gehäuse 3 aufgenommene Energiespeicherzellen 4, deren Lage und Position in FIG. 1 durch strichlinierte Linien angedeutet ist.

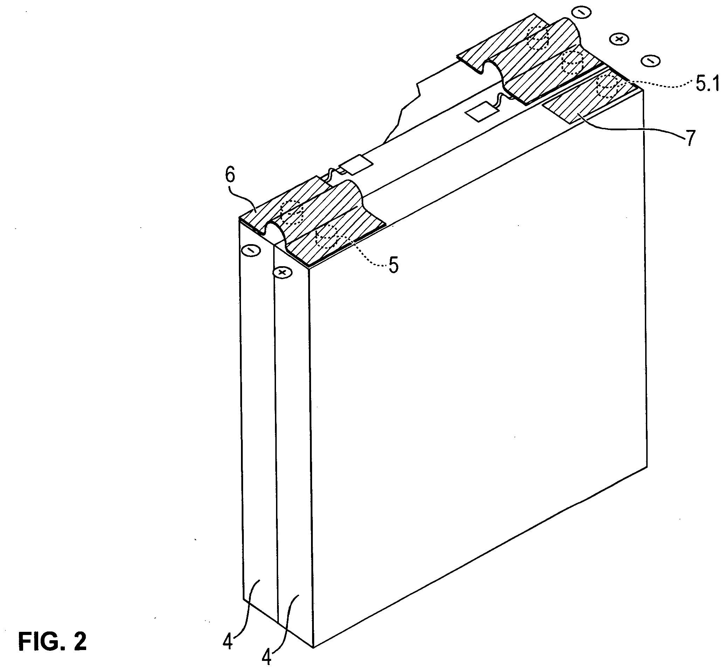

Jede Energiespeicherzelle 4 umfasst, wie in FIG. 2 zu sehen ist, zwei entgegengesetzt polarisierte Zellpole 5. Die Energiespeicherzellen 4 sind so angeordnet, dass zwei Reihen Zellpole mit jeweils alternierender Polarität vorhanden sind. Benachbarte Zellpole entgegengesetzter Polarität einer Reihe sind paarweise durch je einen Zellpolverbinder 6 verbunden, beispielsweise derart dass die zugehörigen Energiespeicherzellen 4 elektrisch in Reihe geschalten sind, und verbindungstechnisch endstellige Zellpole der Energiespeicherzellen 4 zur Leistungsentnahme bzw. zum Leistungsabgriff kontaktiert werden können.

An dem in FIG. 2 gezeigten endseitigen Zellpol 5.1 ist ein Spannungsabgriff 7 vorhanden, über welchen der Energiespeicher 1 zur Leistungsentnahme bzw. zur Aufladung elektrisch kontaktiert werden kann.

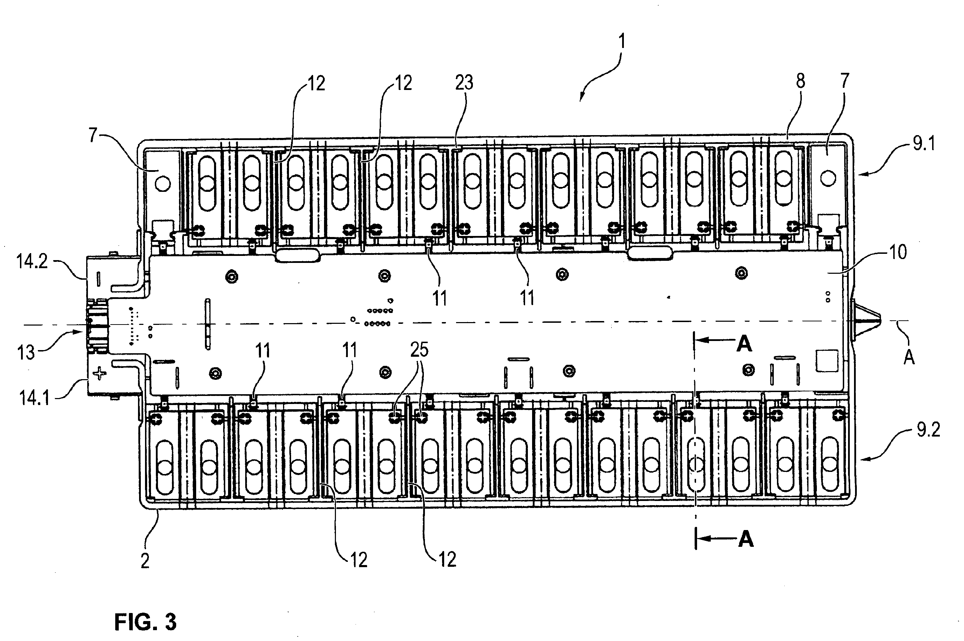

Wie insbesondere in FIG. 1 sowie auch in FIG. 3 zu sehen ist, umfasst das Kontaktierungssystem 2 einen Tragrahmen 8, an bzw. auf welchen im Wesentlichen sämtliche Komponenten des Kontaktierungssystems 2 montiert sind.

Der Tragrahmen 8 spannt einen im Wesentlichen rechteckigen äußeren Rahmen auf, innerhalb dessen im Wesentlichen sämtliche Komponenten und Bauteile montiert sind.

Innerhalb des äußeren Rahmens kann/können sich ein innerer Rahmen und/oder korrespondierende Verbindungs- und/oder Befestigungsstege oder -traversen erstrecken, an welchen beispielsweise die Zellpolverbinder 6 usw. befestigt oder festgelegt sein können.

Wie insbesondere aus FIG. 1 und FIG. 3 ersichtlich ist, sind die Zellpole 5, und entsprechend die Zellpolverbinder 6 entlang zweier paralleler Linien angeordnet, welche sich parallel zur Längsachse A des Kontaktierungssystems 2 erstrecken. Insbesondere ist an beiden Längsseiten des Kontaktierungssystems 2 jeweils eine Zellpolverbinderreihe ausgebildet, die in FIG. 3 durch die Bezugszeichen 9.1 und 9.2 gekennzeichnet sind.

Mittig zwischen den Zellpolverbinderreihen 9 ist eine Platine 10 angeordnet, deren elektrische Anschlusskontakte mit weiter unten noch genauer beschriebenen Kontaktelementen 11, genauer Platinenkontaktelementen, der Zellpolverbinder 6 verbunden sind.

Die Platine 10 kann beispielsweise elektronische Schaltungen oder Komponenten zur Steuerung, beispielsweise Ladesteuerung, Ladungsüberwachung, bzw. generell zur Überwachung des Betriebs des Energiespeichers 1, insbesondere zur Überwachung von Betriebsparametern des Energiespeichers 1, insbesondere der Energiespeicherzellen 4, umfassen.

Zwischen unmittelbar benachbarten Zellpolkontaktelementen 6 können jeweils Isolations- und Haltestege 12 ausgebildet sein, welche Bestandteil des Tragrahmens 8 sein können.

An einem stirnseitigen Ende umfasst das Kontaktierungssystem 2 eine elektrische Schnittstelle 13, welche beispielsweise zumindest teilweise integral mit der Platine 10 ausgebildet sein kann. Die Schnittstelle 13 kann beispielsweise einen positiven Spannungsabgriff 14.1 und einen negativen Spanungsabgriff 14.2 umfassen, welche über entsprechende Leitungen mit den entsprechenden positiven bzw. negativen Spannungsabgriffen 7 verbunden sein können. Die Schnittstelle 13 kann, wie aus FIG. 3 ersichtlich ist, über den Tragrahmen 8 hinausragen, bzw. durch einen stirnseitigen Vorsprung am Tragrahmen 8 gebildet sein, oder aber im Wesentlichen bündig mit der Stirnseite abschließen.

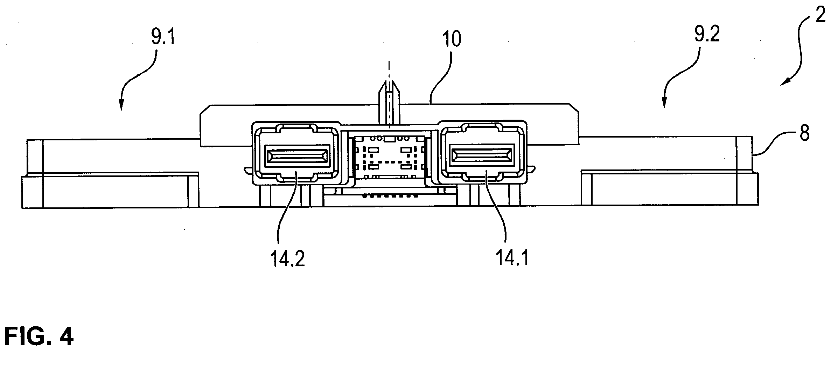

Zwischen den Spannungsabgriffen 14 kann die Schnittstelle 13, wie beispielsweise aus FIG. 4 ersichtlich ist, des Weiteren eine zusätzliche Steck- oder Verbindungskomponente umfassen, welche beispielsweise mit elektronischen Komponenten der Platine 10 zum Zwecke der Bereitstellung eines Signalabgriffs verbunden sein kann.

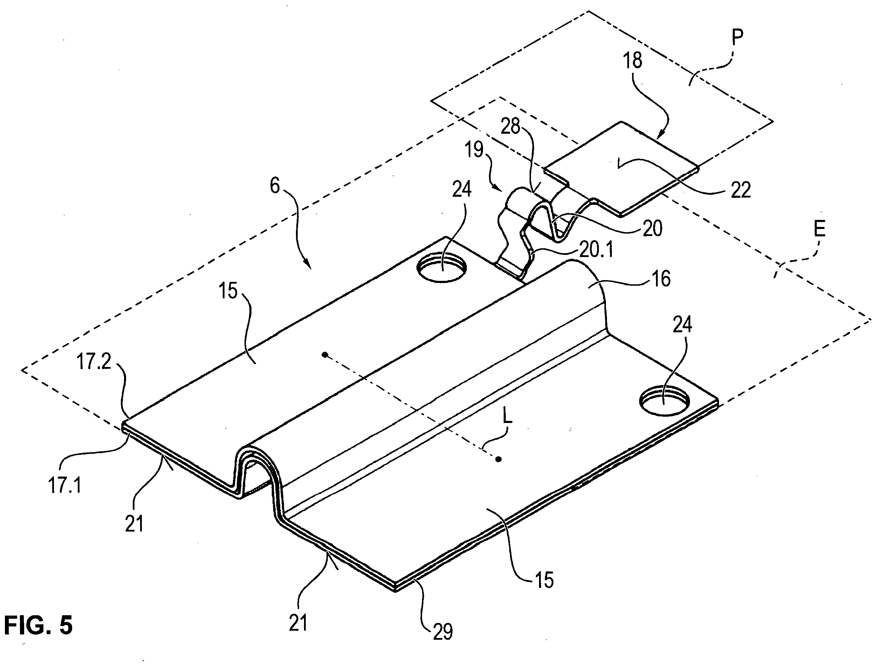

FIG. 5 zeigt eine perspektivische Darstellung eines Zellpolverbinders 6. Der Zellpolverbinder 6 ist, wie bereits ausgeführt, ausgelegt zwei, vorliegend entgegengesetzt polarisierte, Zellpole 5, z.B. benachbarter Energiespeicherzellen 4, elektrisch miteinander zu verbinden.

Der Zellpolverbinder 6 umfasst zwei Zellpolkontaktelemente 15, die im vorliegenden Fall flächig, mit rechteckiger Grundform ausgebildet sind. Die Zellpolkontaktelemente 15 sind im gezeigten Beispiel durch eine Ausgleichsstruktur 16, vorliegend in Form einer sich über die Zellpolkontaktelemente 15 erhebende, eindimensional gebogene Welle, verbunden. Die Welle 16 und die Zellpolkontaktelemente 15 sind im vorliegenden Fall durch zwei parallele Materialschichten 17.1 und 17.2 ausgebildet, wobei jede der Materialschichten 17 als einstückiges Bauteil bzw. einstückige Komponente ausgebildet ist.

Die Welle bzw. Ausgleichsstruktur 16 dient im vorliegenden Beispiel dazu, Zug-, Druck- und/oder Torsionsspannungen auszugleichen, die nach Verbindung der Zellpolverbinder 6 mit den jeweiligen Zellpolen 5 beim Betrieb und Einsatz des Energiespeichers 1 auftreten können.

Die Ausgleichsstruktur 16 kann anderweitig wie in den Figuren gezeigt geformt sein, und beispielsweise mehrere Wellen aufweisen, wobei sich gezeigt hat, dass Zellpolverbinder 6 mit Ausgleichsstrukturen 16 mit lediglich einer einzigen Welle insbesondere bei Traktionsbatterien für Elektrofahrzeuge zuverlässig eingesetzt werden können.

Der Zellpolverbinder 6 umfasst ferner ein zur Kontaktierung einer elektronischen Schaltung, die im vorliegenden Ausführungsbeispiel z.B. auf der Platine implementiert sein kann, eingerichtetes und ausgebildetes Platinenkontaktelement 18. Das Platinenkontaktelement 18 ist mit einem der Zellpolkontaktelemente 15 des Zellpolverbinders 6 über einen Kontaktierungssteg 19 elektrisch leitend verbunden.

Der Kontaktierungssteg 19 umfasst zumindest ein schräg zu einer Zellpolkontaktierungsebene E des Zellpolkontaktelements 15 verlaufendes Stegsegment 20.

Die Zellpolkontaktierungsebene E ist vorliegend durch die an der von der Welle 16 abgewandten (Unter-)Seite des Zellpolkontaktelements 6 ausgebildete Zellpolkontaktierungsfläche 21 definiert, wobei die Zellpolkontaktierungsebene E und die Zellpolkontaktierungsfläche 21 beispielsweise im Wesentlichen koplanar zueinander gelegen sein können.

Das Platinenkontaktelement 18 ist im vorliegenden Beispiel plättchenförmig mit einer quadratischen Grundfläche ausgebildet wobei jedoch auch andere Formen, insbesondere ein- und zweifach gekrümmte Flächen mit beliebiger Grundflächenform in Betracht kommen.

Vorzugsweise weist das Platinenkontaktelement 18 jedoch eine parallel zur Zellpolkontaktierungsebene E gemessene Breite auf, die größer ist als eine korrespondierende Breite des Kontaktierungsstegs 19, welcher wie im Beispiel der Figuren bandartig mit einer gekrümmten und/oder gewellten Struktur ausgebildet sein kann. Insbesondere bei derartigen Ausgestaltungen kann einerseits durch die vergrößerte Breite des Platinenkontaktelements 18 erreicht werden, dass elektrische Kontakte zwischen den elektrischen Kontakten der Platine und den Platinenkontaktelementen 18 vergleichsweise einfach hergestellt werden können. Andererseits kann durch die verringerte Breite des Kontaktierungsstegs 19 eine ausreichend federnde, insbesondere elastisch federnde, Struktur erhalten werden, welche beispielsweise einen ausreichenden Ausgleich von Druck-, Zug-, und/oder Torsionsbeanspruchungen zwischen Platine 10 und Zellpolkontaktelementen 6 ermöglicht.

Das Platinenkontaktelement 18 weist eine Platinenkontaktierungsfläche 22 auf, welche derart eingerichtet ist, dass diese mit korrespondierenden elektrischen Kontakten der Platine 10, d.h. mit korrespondierenden Platinenkontakten, elektrisch verbunden werden kann, beispielsweise mittels Löten, Schweißen, und/oder durch mechanische Verbindungen. Im vorliegenden Beispiel liegen die Platinenkontaktierungsflächen 22 in einer gemeinsamen Platinenkontaktierungsebene P, die von der Zellpolkontaktierungsebene E mit einem vorgegebenen Abstand beabstandet ist.

Die Platinenkontaktierungsfläche 22 ist im Beispiel der Figuren von der Zellpolkontaktierungsfläche 21 abgewandt, d.h. deren Normalenvektoren zeigen in einander entgegengesetzte Richtungen.

Das Platinenkontaktelement 18, insbesondere die Platinenkontaktierungsfläche 22, ist im vorliegenden Beispiel, was auch in Zusammensicht mit den FIG. 1 bis 4 deutlich wird, von der Zellpolkontaktierungsebene E, insbesondere mit einem vorgegebenen Abstand, beabstandet, wobei das Platinenkontaktelement 18 vorliegend im Wesentlichen parallel zur Zellpolkontaktierungsebene E ausgerichtet ist. In Zusammensicht mit FIG. 1 ergibt sich daraus, dass der Zwischenraum zwischen Energiespeicherzellen 4 und der den Energiespeicherzellen 4 zugewandten Seite der Platine 10 durch entsprechende Wahl des vorweg genannten Abstands in geeigneter Weise eingestellt werden kann, so dass im Zwischenraum ausreichend Platz für auf der Platine aufgenommene elektronische Bauteile zur Verfügung steht.

Im Übrigen sei erwähnt, dass, wie im vorliegenden Beispiel, im Wesentlichen sämtliche auf der Platine 10 vorhandene Bauteile auf der den Energiespeicherzellen 4 zugewandten Seite ausgebildet sind, so dass durch die Platinenrückseite zumindest ein mechanischer Schutz für diese Bauteile erhalten werden kann.

Die mit den Platinenkontaktelementen 18 zu verbindenden elektrischen Kontakte der Platine 10 können, wie im gezeigten Beispiel, auf der im montierten Zustand den Energiespeicherzellen 4 zugewandten Platinenseite angeordnet sein, so dass eine vergleichsweise einfache Kontaktierung und Positionierung der Platine 10 auf den Platinenkontaktelementen 18 und dem Tragrahmen 8 möglich ist.

Im Beispiel der Figuren ist das Platinenkontaktelement 18 und der Kontaktierungssteg 19 an einer von einer Zellpolkontaktierungsfläche 21 des Zellpolkontaktelements 15 abgewandten Seite ausgebildet, so dass auch bei vergleichseiwese niedrig bauenden Zellpolen eine komfortable Anbindung der Zellpolverbinder 6 an den Zellpolen 5 möglich ist.

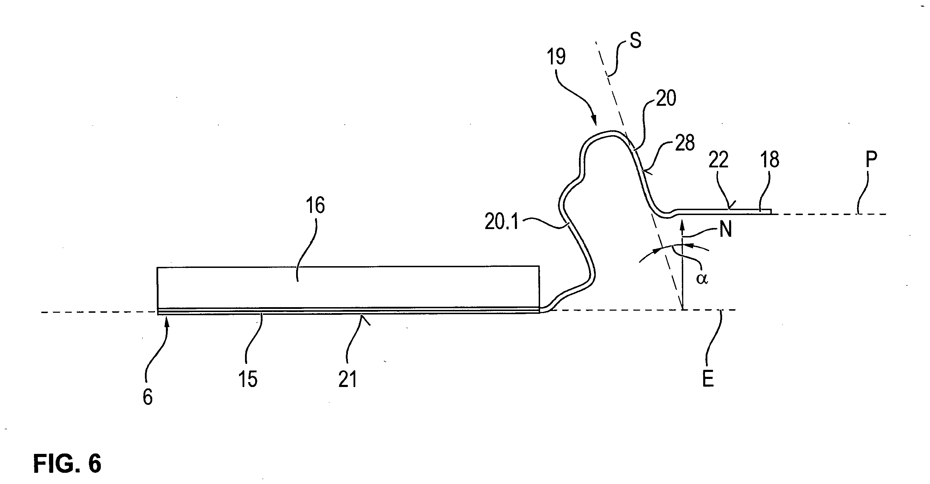

Wie insbesondere aus FIG. 6 ersichtlich ist, verlaufen das Platinenkontaktelement 18 und der Kontaktierungssteg 19 in Draufsicht betrachtet vollständig außerhalb des Zellpolkontaktelements 15, so dass ausreichend Platz zur Montage der Zellpolkontaktelemente 15 auf den Zellpolen 5 verfügbar ist, und die Platine 10 ausreichend weit von den Zellpolen 5 beabstandet ist, um ggf. abträgliche Einwirkungen beim Verbindungsprozess, wie z.B. ein thermischer Eintrag usw., zu vermeiden.

Jedoch kann in Ausgestaltungen, beispielsweise je nach Ausführung und Anordnung der Zellpole 5, auch vorgesehen sein, dass zwischen Zellpolkontaktelement 15 und Kontaktierungssteg 19 und/oder Platinenkontaktelement 18 ein mehr oder wenig großer Überlapp besteht.

Wie z.B. aus FIG. 6 ersichtlich ist verläuft das Stegsegment 20, und im Übrigen auch das weitere Stegelement 20.1, schräg zur Zellpolkontaktierungsebene, E, wobei die Steglängsachse S um einen spitzen Winkel a, beispielsweise kleiner als 45 Grad oder kleiner als 30 Grad, zum Normalenvektor N der Zellpolkontaktierungsebene E geneigt ist. Das weitere Stegelement 20.1 kann entsprechend oder aber mit anderem Winkel zum Normalenvektor N geneigt sein.

Das Platinenkontaktelement 18 und der Kontaktierungssteg 19 erstrecken sich, in Draufsicht betrachtet, wie in den gezeigten Beispielen, im Wesentlichen senkrecht von einer Seitenkante der Zellpolverbinder 6, wobei die Seitenkante senkrecht zur Welle 16 verläuft, d.h. im vorliegenden Fall parallel zur Verbindungslinie L zweier benachbarter Zellpolkontaktelemente 15, bzw. parallel zur Verbindungslinie L der Flächenschwerpunkte der Zellpolkontaktelemente 15, bzw. der Zellpolkontaktierungsfläche 21 (siehe FIG. 5).

Die vorbeschriebene Geometrie betreffend insbesondere relative Lage des Platinenkontaktelements 18 zum Zellpolkontaktelement 15 bzw. den Winkel a, ist insbesondere von Vorteil wenn, wie im gezeigten Ausführungsbeispiel, mehrere parallele Reihen von Zellpolverbindern 6 mit zwischenliegender Platine 10 vorhanden sind.

Der Kontaktierungssteg 19 kann wie im vorliegenden Ausführungsbeispiel einstückig mit dem Zellpolkontaktelement 15 und ferner einstückig mit dem jeweiligen Platinenkontaktelement 18 ausgebildet sein. Beispielsweise kann ein solcher Zellpolverbinder 6 als einstückiges Bauteil aus einem Flachprodukt, z.B. durch Stanzen, hergestellt werden, wobei der Kontaktierungssteg 19 in einem Umformschritt entsprechend der jeweils gewünschten Form und Schräg-Ausrichtung des Stegsegments 20 umgeformt werden kann.

Der Kontaktierungssteg 19 kann, wie im Ausführungsbeispiel der Figuren gezeigt, zwei schräg zur Zellpolkontaktierungsebene E verlaufende, beispielsweise etwa parallel zueinander ausgerichtete, Stegsegmente umfassen, wobei neben dem bereits genannten Stegsegment 20 das weitere Stegsegment 20.1 vorhanden sein kann.

Die beiden Stegsegmente 20, 20.1 sind über ein vorliegend gekrümmt ausgebildetes Verbindungselement miteinander verbunden und bilden eine insgesamt etwa U-förmige Struktur aus, die einerseits ausreichend robust ist, und sich andererseits zur Kompensation von Druck-, Zug-, und/oder Torsionsbeanspruchungen oder -belastungen zwischen Platinenkontaktelement 18 und Zellpolkontaktelement 15 als vorteilhaft erwiesen hat.

Die Krümmung des Kontaktierungsstegs 19 kann auch anders als in den Figuren gezeigt ausgebildet sein. Jedoch hat sich ein Verlauf des Kontaktierungsstegs 19 insbesondere für Traktionsbatterien für Elektrofahrzeuge im Hinblick auf die Montage, den möglichen Ausgleich von mechanischen Belastungen, und im Hinblick auf die Herstellung als besonders vorteilhaft erwiesen, insbesondere bei Ausgestaltungen, bei welchen das Stegsegment 20, und ggf. das weitere Stegsegment 20.1 einen im Wesentlichen geradlinigen Verlauf aufweisen, und über ein zwischenliegendes Verbindungselement eine U-förmige Struktur ausbilden. Die Stegsegmente 20, 20.1 können Bestandteil eines S-förmig gekrümmten Stegabschnitts sein.

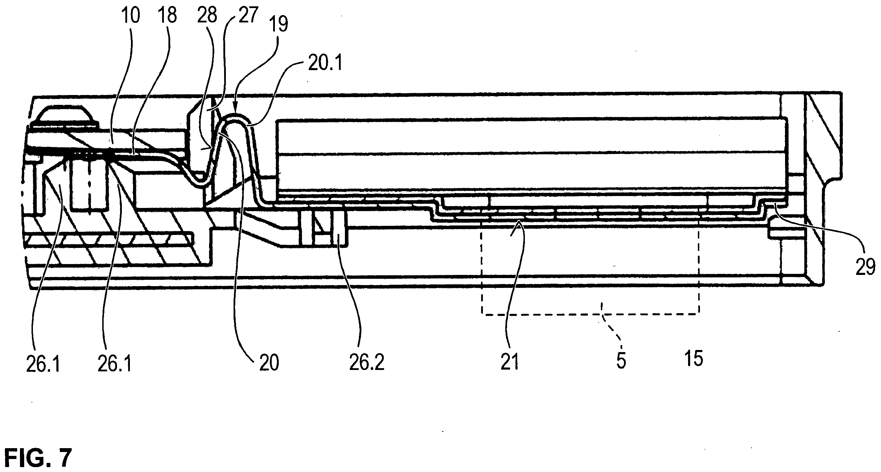

FIG. 7 zeigt eine Teilquerschnittsdarstellung entlang der Linie A-A der FIG. 3. Aus einer Zusammenschau der FIG. 1 bis FIG. 7 ergibt sich, dass der Zellpolverbinder 6 anhand der Zellpolkontaktelemente 15 auf dem Tragrahmen 8 abgestützt und befestigt ist.

Insbesondere kann der Zellpolverbinder 6 an einer vom Kontaktierungssteg 19 abgewandten Seitenkante in ein Rastelement 23, z.B. eine Rastnut, des Tragrahmens 8, eingerastet sein, und an einer davon abgewandten Seitenkante beispielsweise mittels zwei in den Zellpolkontaktelementen 15 vorgesehenen Durchgangslöchern 24 mit dem Tragrahmen 8 unter Verwendung einer form- und/oder kraftschlüssigen Verbindung verbunden sein. Die Durchgangslöcher 24 können beispielsweise zur Herstellung einer durch Heißverstemmung 25 erzeugten form- und kraftschlüssigen Verbindung verwendet werden. Die Platine 10 kann ebenfalls über geeignete Verbindungen am Tragrahmen 8 befestigt sein.

Wie aus FIG. 7 ersichtlich ist, kann der Tragrahmen 8 ein oder mehrere erste Stützelemente 26.1 und ein oder mehrere zweite Stützelemente 26.2 umfassen, wobei die Zellpolkontaktelemente 15 auf den zweiten Stützelementen 26.2 abgestützt sein können, beispielsweise an einer von den Rastelementen 23 abgewandten Seite. Die Platinenkontaktelemente 18 können an einer von der Platinenkontaktierungsfläche 22 abgewandten Seite auf den ersten Stützelementen 26.1 abgestützt sein, wobei die ersten Stützelemente 26.1 damit als Auflager für die Platinenkontaktelemente 18 und ggf. für die, in der Ansicht der FIG. 7 betrachtet darüber gelegene, Platine 10 dienen können.

Der Tragrahmen 8 kann ferner geeignete Anschlag- und Positionierungselemente 27 oder -vorsprünge aufweisen, an welchen die Platine 10 in einer Richtung senkrecht zu den Zellpolverbinderreihen 9.1 bzw. 9.2 angeschlagen werden kann, so dass eine geeignete Positionierung der Platine 10 relativ zum Tragrahmen 8 erreicht werden kann.

Alternativ oder zusätzlich kann das Stegsegment 20 eine z.B. dem jeweiligen Zellpolkontaktelement 15 abgewandte Anschlagfläche 28 aufweisen, die beispielsweise zum Anschlagen der Platine 10 oder anderer Komponenten in Richtung senkrecht zu den Zellpolverbinderreihen 9 dient, beispielsweise im Rahmen der Herstellung, der Montage und/oder zur Positionierung der Platine 10.

Die Stegsegmente 20 und/oder die Anschlag- und Positionierungselemente 27 können ferner Rastelemente zur Verrastung der Platine 10 oder anderer Komponenten umfassen.

Wie insbesondere auch aus der Darstellung der FIG. 7 ersichtlich ist, sind die Zellpolkontaktelemente 15 mehrlagig ausgebildet und umfassen vorliegend zwei Materiallagen, wobei der Kontaktierungssteg 19 mit derjenigen Materiallage 29 einstückig verbunden ist, welche bei ordnungsgemäßer Montage mit den Zellpolen 5 verbunden ist, d.h. welche die Zellpolkontaktierungsfläche 21 umfasst, mit welcher das Zellpolkontaktelement 15 unmittelbar mit dem jeweiligen Zellpol 5 verbunden werden kann.

Insgesamt zeigt sich, dass durch das hierin vorgeschlagene Kontaktierungssystem und den vorgeschlagenen Energiespeicher die der Erfindung zu Grunde liegende Aufgabe gelöst werden kann.

### Bezugszeichenliste

- 1: Energiespeicher
- 2: Kontaktierungssystem
- 3: Gehäuse
- 4: Energiespeicherzelle
- 5, 5.1: Zellpol
- 6: Zellpolverbinder
- 7: Spannungsabgriff
- 8: Tragrahmen
- 9.1, 9.2: Zellpolverbinderreihe
- 10: Platine
- 11: Kontaktelement
- 12: Haltesteg
- 13: Schnittstelle
- 14.1, 14.2: Spannungsabgriff
- 15: Zellpolkontaktelement
- 16: Ausgleichsstruktur
- 17: Materialschicht
- 18: Platinenkontaktelement
- 19: Kontaktierungssteg
- 20: Stegsegment
- 20.1: weiteres Stegsegment
- 21: Zellpolkontaktierungsfläche
- 22: Platinenkontaktierungsfläche
- 23: Rastelement
- 24: Durchgangsloch
- 25: Heißverstemmung
- 26: Stützelement
- 27: Anschlag- und Positionierelement
- 28: Anschlagfläche
- 29: Materiallage

- A: Längsachse
- E: Zellpolkontaktierungsebene
- L: Verbindungslinie
- N: Normalenvektor
- P: Platinenkontaktierungsebene
- S: Steglängsachse
- α: Winkel

## Patentansprüche

1. Kontaktierungssystem (2) zur elektrischen Verschaltung mehrerer Energiespeicherzellen (4) eines elektrischen Energiespeichers (1), umfassend mehrere, zur elektrischen Verschaltung jeweils zumindest zweier Zellpole (5) der Energiespeicherzellen (4) ausgebildete Zellpolverbinder (6) mit jeweils zumindest zwei Zellpolkontaktelementen (15), wobei
a) zumindest einer der Zellpolverbinder (6) zumindest ein zur Kontaktierung einer elektronischen Schaltung (10) ausgebildetes Platinenkontaktelement (18) umfasst, welches mit einem der Zellpolkontaktelemente (15) des Zellpolverbinders (6) über einen Kontaktierungssteg (19) elektrisch leitend verbunden ist, und der Kontaktierungssteg (19) zumindest zwei schräg zu einer Zellpolkontaktierungsebene (E) des Zellpolkontaktelements (15) ausgerichtete Stegsegmente (20, 20.1) umfasst, welche in Schnitten senkrecht zur Zellpolkontaktierungsebene (E) ein U-förmiges Profil aufweisen, und
b) der Kontaktierungssteg (19) einstückig mit zumindest einem Zellpolkontaktelement (15) des jeweiligen Zellpolverbinders (6) ausgebildet ist oder der Kontaktierungssteg (19) bei mehrlagiger Ausbildung der Zellpolkontaktelemente (15) mit zumindest zwei Materiallagen mit derjenigen Materiallage (29) einstückig verbunden ist, welche bei ordnungsgemäßer elektrischer Verbindung unmittelbar mit den Zellpolen (5) verbunden ist.

2. Kontaktierungssystem (2) nach Anspruch 1,
wobei das Platinenkontaktelement (18) plättchenförmig ausgebildet ist, und/oder wobei das Platinenkontaktelement (18) zumindest teilweise von der Zellpolkontaktierungsebene (E) beabstandet ist, und/oder
wobei das Platinenkontaktelement (18) im Wesentlichen parallel zur Zellpolkontaktierungsebene (E) ausgerichtet ist, und/oder
wobei das Platinenkontaktelement (18) und der Kontaktierungssteg (19) an einer von einer Zellpolkontaktierungsfläche (21) des Zellpolkontaktelements (15) abgewandten Seite ausgebildet sind und/oder
wobei das Platinenkontaktelement (18) und der Kontaktierungssteg (19) in Draufsicht betrachtet zumindest teilweise außerhalb des Zellpolkontaktelements (15) verlaufen, und/oder
wobei sich der Kontaktierungssteg (19) und das damit verbundene Platinenkontaktelement (18) quer, insbesondere senkrecht, zur Verbindungslinie (L) zweier benachbarter Zellpolkontaktelemente (15) des jeweiligen Zellpolverbinders (6) erstrecken.

3. Kontaktierungssystem (2) nach einem der Ansprüche 1 oder 2,
wobei der Kontaktierungssteg (19) einstückig mit dem jeweiligen Platinenkontaktelement (18) ausgebildet ist, und/oder
wobei die zumindest zwei Stegsegmente (20, 20.1) in Schnitten senkrecht zur Zellpolkontaktierungsebene (E) einen im Wesentlichen geradlinigen Verlauf aufweisen, und/oder Bestandteil eines S-förmig gekrümmten Stegabschnitts des Kontaktierungsstegs (19) sind, und/oder
wobei der Kontaktierungssteg (19) als ein flach ausgebildetes Kontaktband umgesetzt ist.

4. Kontaktierungssystem (2) nach zumindest einem der Ansprüche 1 bis 3,
wobei zwei Zellpolkontaktelemente (15) zumindest eines Zellpolverbinders (6) des Kontaktierungssystems (2), in jeweils einstückiger Ausbildung über einen zum Ausgleich von Zug- und/oder Biege- und/oder Torsionsbeanspruchungen des Zellpolverbinders (6) ausgebildeten Wellenabschnitt (16), mit zumindest einem Wellenberg (16) und/oder zumindest einem Wellental, miteinander verbunden sind, und/oder
wobei Zellpolkontaktierungsflächen (21) der Zellpolkontaktelemente (15) zumindest eines Zellpolverbinders (6) in einer gemeinsamen Zellpolkontaktierungsebene (E) gelegen sind, wobei Platinenkontaktierungsflächen (22) zumindest zweier Platinenkontaktelemente (18) in einer gemeinsamen Platinenkontaktierungsebene (P) gelegen sind.

5. Kontaktierungssystem (2) nach zumindest einem der Ansprüche 1 bis 4, wobei eines der Stegsegmente (20) eine Anschlagfläche (28) zur Anlage einer mit dem Platinenkontaktelement (18) verbundenen Platine (10) oder einer anderen Komponente des Kontaktierungssystems (2) umfasst, und/oder wobei eines der Stegsegmente (20) zumindest an einer vom jeweiligen Zellpolkontaktelement (15) abgewandten Seite zumindest ein Rastelement zur Verrastung einer bzw. der mit dem Platinenkontaktelement (18) verbundenen Platine (10) umfasst, und/oder
wobei das Platinenkontaktelement (18) und/oder eines der Stegsegmente (20) des Weiteren ausgebildet und eingerichtet ist als Tragelement/e für eine bzw. die mit dem Platinenkontaktelement (18) verbundene Platine (10).

6. Kontaktierungssystem (2) nach zumindest einem der Ansprüche 1 bis 5, umfassend des Weiteren einen Tragrahmen (8) an welchem der zumindest eine Zellpolverbinder (6) mechanisch befestigt ist,
wobei der Zellpolverbinder (6) eine zur Befestigung mit dem Tragrahmen (8) ausgebildete Befestigungskomponente (24) umfasst, welche ausgebildet ist zur form- und/oder kraftschlüssigen Verbindung mit dem Tragrahmen (8), wobei die Befestigungskomponente (24) zumindest ein senkrecht zur Zellpolkontaktierungsebene (E) ausgerichtetes Durchgangsloch (24) aufweist, wobei der Zellpolverbinder (6) mittels des Durchgangslochs (24) durch eine Nietverbindung und/oder Verstemmung (25) mit dem Tragrahmen (8) verbunden ist, und wobei der Zellpolverbinder (6) an einer von der Befestigungskomponente (24), insbesondere dem Durchgangsloch (24), abgewandten Seite mittels zumindest eines am Tragrahmen (8) ausgebildeten Rastelements (23) im Eingriff ist,
wobei der Tragrahmen (8) für zumindest ein Platinenkontaktelement (18) ein Stützelement (26) aufweist, umfassend zumindest einen Stützvorsprung (26), wobei das Platinenkontaktelement (18) mit einer von der Platinenkontaktierungsfläche (22) des Platinenkontaktelements (18) abgewandten Seite auf dem Stützelement (26) abgestützt ist.

7. Kontaktierungssystem (2) nach zumindest einem der Ansprüche 1 bis 6, umfassend zumindest zwei Zellpolverbinderreihen (9.1, 9.2) mit jeweils mehreren, parallel zur Längsachse (A) des Kontaktierungssystems (2) hintereinander gelegen angeordneten Zellpolverbindern (6), wobei die Zellpolverbinder (6) einer Zellpolverbinderreihe (9.1, 9.2) derart ausgerichtet sind, dass Verbindungslinien (L) der Zellpolkontaktelemente (15) der Zellpolverbinder (6) jeweils parallel zur Längsachse der Zellpolverbinderreihe orientiert sind, und/oder
wobei Zellpolverbinder (6) einer Zellpolverbinderreihe (9.1, 9.2) derart ausgerichtet sind, dass sich die aus Kontaktierungssteg (19) und Platinenkontaktelement (18) gebildete Einheit quer zur Längsachse (A) der Zellpolverbinderreihe (9.1, 9.2) und/oder des Kontaktierungssystems (2) erstreckt,
wobei die Zellpolverbinderreihen (9.1, 9.2) paarweise ausgebildet sind, und wobei die Zellpolverbinder (6) eines Zellpolverbinderreihenpaars (9.1, 9.2) derart ausgerichtet sind, dass die Platinenkontaktelemente (18) der einen Zellpolverbinderreihe (9.1) den Platinenkontaktelementen (18) der jeweils anderen Zellpolverbinderreihe (9.2) zugewandt sind,
wobei das Kontaktierungssystem (2) eine Platine (10) mit einer Mehrzahl an Platinenkontakten umfasst, wobei die Platine (10) parallel zur Längsachse (A) der Zellpolverbinderreihe (9.1, 9.2) und /oder des Kontaktierungssystems (2) verläuft und wobei die Anzahl der Platinenkontakte der Anzahl der Platinenkontaktelemente (18) entspricht und wobei jeder Platinenkontakt mit einem Platinenkontaktelement (18) unmittelbar elektrisch leitend verbunden ist,
wobei die Platine (10) zwischen den zwei Zellpolverbinderreihen (9.1, 9.2) angeordnet ist und der Platine (10) zugewandte Platinenkontaktelemente (18) mit korrespondierenden Platinenkontakten elektrisch kontaktiert sind.

8. Kontaktierungssystem (2) nach zumindest einem der Ansprüche 1 bis 7, umfassend des Weiteren zumindest eine an einem längsseitigen Ende des Kontaktierungssystems (2) ausgebildete elektrische Schnittstelle (13).

9. Energiespeicher (1) umfassend eine Mehrzahl an Energiespeicherzellen (4), welche jeweils Zellpole (5) entgegengesetzter Polarität umfassen, und zumindest ein Kontaktierungssystem (2) nach einem der Ansprüche 1 bis 8,
wobei die Zellpole (5) zumindest einer Teilmenge der Energiespeicherzellen (4) mittels der Zellpolverbinder (6) des Kontaktierungssystems (2) elektrisch verschaltet sind,
wobei elektrische Kontaktflächen der mit einem Kontaktierungssystem (2) verschalteten Zellpole (5) in einer gemeinsamen Zellpolkontaktierungsebene (E) gelegen sind, und Platinenkontaktierungsflächen (22) der Platinenkontaktelemente (18) in einer gemeinsamen Platinenkontaktierungsebene (P) gelegen sind,
wobei die Zellpolkontaktierungsebene (E) und die Platinenkontaktierungsebene (P) echt parallel zueinander angeordnet sind, und wobei die Platinenkontaktierungsebene (P) in Richtung der Zellpolnormalen (N) der Zellpole (5) betrachtet oberhalb der Zellpolkontaktierungsebene (E) gelegen ist.

## Claims

1. Contacting system (2) for the electrical interconnection of a number of energy storage cells (4) of an electrical energy store (1), comprising a number of cell pole connectors (6), formed for the electrical interconnection of in each case at least two cell poles (5) of the energy storage cells (4) respectively having at least two cell pole contact elements (15), wherein
a) at least one of the cell pole connectors (6) comprises at least one board contact element (18), which is formed for the contacting of an electronic circuit (10) and is connected in an electrically conducting manner to one of the cell pole contact elements (15) of the cell pole connector (6) by way of a contacting web (19), and the contacting web (19) comprises at least two web segments (20, 20.1) aligned obliquely in relation to a cell pole contacting plane (E) of the cell pole contact element (15), which have a U-shaped profile in sections perpendicular to the cell pole contacting plane (E), and
b) the contacting web (19) is formed in one piece with at least one cell pole contact element (15) of the respective cell pole connector (6), or, in the case of multi-layered formation of the cell pole contact elements (15) comprising at least two layers of material, the contacting web (19) is connected in one piece with that layer of material (29) which, given proper electrical connection, is connected directly to the cell poles (5).

2. Contacting system (2) according to Claim 1, wherein the board contact element (18) is formed as a small plate, and/or
wherein the board contact element (18) is at least partially at a distance from the cell pole contacting plane (E), and/or
wherein the board contact element (18) is aligned substantially parallel to the cell pole contacting plane (E), and/or
wherein the board contact element (18) and the contacting web (19) are formed on a side facing away from a cell pole contacting surface (21) of the cell pole contact element (15) and/or
wherein the board contact element (18) and the contacting web (19) extend when considered in plan view at least partially outside the cell pole contact element (15), and/or
wherein the contacting web (19) and the board contact element (18) connected thereto extend transversely, in particular perpendicularly, to the connecting line (L) of two adjacent cell pole contact elements (15) of the respective cell pole connector (6).

3. Contacting system (2) according to one of Claims 1 or 2,
wherein the contacting web (19) is formed in one piece with the respective board contact element (18), and/or wherein the at least two web segments (20, 20.1) have in sections perpendicular to the cell pole contacting plane (E) a substantially straight extent, and/or are a component part of a web portion of the contacting web (19) that is curved in an S-shaped manner, and/or wherein the contacting web (19) is formed in practice as a contact strip, which is formed flat.

4. Contacting system (2) according to at least one of Claims 1 to 3,
wherein two cell pole contact elements (15) of at least one cell pole connector (6) of the contacting system (2) in a respectively one-piece form are connected to one another by way of a wave portion (16) that is formed to compensate for tensile and/or flexural and/or torsional stresses of the cell pole connector (6), with at least one wave crest (16) and/or at least one wave trough, and/or
wherein cell pole contacting surfaces (21) of the cell pole contact elements (15) of at least one cell pole connector (6) are situated in a common cell pole contacting plane (E), board contacting surfaces (22) of at least two board contact elements (18) being situated in a common board contacting plane (P).

5. Contacting system (2) according to at least one of Claims 1 to 4, wherein one of the web segments (20) comprises an abutting surface (28) for the abutment of a board (10) connected to the board contact element (18) or some other component of the contacting system (2), and/or
wherein one of the web segments (20) comprises, at least on a side facing away from the respective cell pole contact element (15), at least one latching element for locking a or the board (10) that is connected to the board contact element (18), and/or
wherein the board contact element (18) and/or one of the web segments (20) is/are furthermore formed and designed as (a) supporting element (s) for a or the board (10) connected to the board contact element (18).

6. Contacting system (2) according to at least one of Claims 1 to 5, further comprising a supporting frame (8), to which the at least one cell pole connector (6) is mechanically fastened,
wherein the cell pole connector (6) comprises a fastening component (24) that is formed for fastening to the supporting frame (8) and is formed for positive and/or non-positive connection to the supporting frame (8), wherein the fastening component (24) has at least one through-hole (24) aligned perpendicularly to the cell pole contacting plane (E), wherein, by means of the through-hole (24), the cell pole connector (6) is connected to the supporting frame (8) by a riveted connection and/or a caulking (25), and wherein, on a side that is facing away from the fastening component (24), in particular the through-hole (24), the cell pole connector (6) is in engagement by means of at least one latching element (23) formed on the supporting frame (8), wherein the supporting frame (8) has for at least one board contact element (18) a supporting element (26), comprising at least one supporting projection (26), the board contact element (18) being supported with a side facing away from the board contacting surface (22) of the board contact element (18) on the supporting element (26) .

7. Contacting system (2) according to at least one of Claims 1 to 6, comprising at least two rows of cell pole connectors (9.1, 9.2) with in each case a number of cell pole connectors (6) arranged parallel to the longitudinal axis (A) of the contacting system (2) and situated one behind the other, wherein the cell pole connectors (6) of a row of cell pole connectors (9.1, 9.2) are aligned in such a way that connecting lines (L) of the cell pole contact elements (15) of the cell pole connectors (6) are in each case oriented parallel to the longitudinal axis of the row of cell pole connectors, and/or
wherein cell pole connectors (6) of a row of cell pole connectors (9.1, 9.2) are aligned in such a way that the unit formed by the contacting web (19) and the board contact element (18) extends transversely to the longitudinal axis (A) of the row of cell pole connectors (9.1, 9.2) and/or of the contacting system (2),
wherein the rows of cell pole connectors (9.1, 9.2) are formed in pairs, and wherein the cell pole connectors (6) of a pair of rows of cell pole connectors (9.1, 9.2) are aligned in such a way that the board contact elements (18) of the one row of cell pole connectors (9.1) are facing the board contact elements (18) of the other row respectively of cell pole connectors (9.2),
wherein the contacting system (2) comprises a board (10) with a plurality of board contacts, wherein the board (10) extends parallel to the longitudinal axis (A) of the row of cell pole connectors (9.1, 9.2) and/or of the contacting system (2), and the number of board contacts corresponding to the number of board contact elements (18), and each board contact being directly connected in an electrically conducting manner to a board contact element (18),
wherein the board (10) is arranged between the two rows of cell pole connectors (9.1, 9.2) and board contact elements (18) facing the board (10) are in electrical contact with corresponding board contacts.

8. Contacting system (2) according to at least one of Claims 1 to 7, further comprising at least one electrical interface (13) formed at a longitudinal end of the contacting system (2).

9. Energy store (1) comprising a plurality of energy storage cells (4), which comprise in each case cell poles (5) of opposed polarity, and at least one contacting system (2) according to one of Claims 1 to 8,
wherein the cell poles (5) of at least one subset of the energy storage cells (4) are electrically interconnected by means of the cell pole connectors (6) of the contacting system (2),
wherein electrical contact surfaces of the cell poles (5) interconnected with a contacting system (2) are situated in a common cell pole contacting plane (E), and board contacting surfaces (22) of the board contact elements (18) are situated in a common board contacting plane (P),
wherein the cell pole contacting plane (E) and the board contacting plane (P) are arranged genuinely parallel to one another, and wherein, when considered in the direction of the cell pole normal (N) of the cell poles (5), the board contacting plane (P) is situated above the cell pole contacting plane (E).

## Revendications

1. Système de mise en contact (2) destiné à l'interconnexion électrique de plusieurs cellules d'accumulation d'énergie (4) d'un accumulateur d'énergie électrique (1), comprenant plusieurs connecteurs de pôle de cellule (6) configurés pour l'interconnexion électrique respectivement d'au moins deux pôles de cellule (5) des cellules d'accumulation d'énergie (4) et comprenant respectivement au moins deux éléments de contact de pôle de cellule (15),
a) au moins l'un des connecteurs de pôle de cellule (6) comportant au moins un élément de contact de platine (18) configuré pour la mise en contact avec un circuit électronique (10), qui est relié de manière électriquement conductrice à l'un des éléments de contact de pôle de cellule (15) du connecteur de pôle de cellule (6) par le biais d'un élément jointif de mise en contact (19), et l'élément de contact de pôle de cellule (15) comportant au moins deux segments d'élément jointif (20, 20.1) orientés en biais par rapport à un plan de mise en contact de pôle de cellule (E) de l'élément de contact de pôle de cellule (15), lesquels possèdent un profilé en U dans des coupes perpendiculaires au plan de mise en contact de pôle de cellule (E), et
b) l'élément jointif de mise en contact (19) est réalisé d'un seul tenant avec au moins un élément de contact de pôle de cellule (15) du connecteur de pôle de cellule (6) respectif ou, dans le cas où l'élément de contact de pôle de cellule (15) est de configuration multicouche avec au moins deux couches de matériau, l'élément jointif de mise en contact (19) étant relié d'un seul tenant à la couche de matériau (29) qui, lors d'une liaison électrique réalisée conforme, est reliée directement aux pôles de cellule (5).

2. Système de mise en contact (2) selon la revendication 1,
l'élément de contact de platine (18) étant réalisé en forme de plaquette, et/ou
l'élément de contact de platine (18) étant au moins partiellement espacé du plan de mise en contact de pôle de cellule (E), et/ou
l'élément de contact de platine (18) étant au moins sensiblement parallèle au plan de mise en contact de pôle de cellule (E), et/ou
l'élément de contact de platine (18) et l'élément jointif de mise en contact (19) étant configurés sur un côté à l'opposé d'une surface de mise en contact de pôle de cellule (21) de l'élément de contact de pôle de cellule (15) et/ou
l'élément de contact de platine (18) et l'élément jointif de mise en contact (19), vus de dessus, s'étendant au moins partiellement en-dehors de l'élément de contact de pôle de cellule (15), et/ou
l'élément jointif de mise en contact (19) et l'élément de contact de platine (18) qui y est relié s'étendant transversalement, notamment perpendiculairement, à une ligne de liaison (L) de deux éléments de contact de pôle de cellule (15) voisins du connecteur de pôle de cellule (6) respectif.

3. Système de mise en contact (2) selon l'une des revendications 1 ou 2,
l'élément jointif de mise en contact (19) étant réalisé d'un seul tenant avec l'élément de contact de platine (18) respectif, et/ou
les au moins deux segments d'élément jointif (20, 20.1), dans des coupes perpendiculaires au plan de mise en contact de pôle de cellule (E), possédant un tracé sensiblement rectiligne et/ou étant partie constitutive d'une portion d'élément jointif courbée en forme de S de l'élément jointif de mise en contact (19), et/ou l'élément jointif de mise en contact (19) étant réalisé sous la forme d'une bande de contact de configuration plane.

4. Système de mise en contact (2) selon au moins l'une des revendications 1 à 3,
deux éléments de contact de pôle de cellule (15) d'au moins un connecteur de pôle de cellule (6) du système de mise en contact (2) étant reliés l'un à l'autre, respectivement dans une configuration monobloc par le biais d'une portion ondulée (16), comprenant au moins un sommet d'onde (16) et/ou au moins un creux d'onde, configurée pour compenser les contraintes de traction et/ou de flexion et/ou de torsion du connecteur de pôle de cellule (6), et/ou
deux surfaces de mise en contact de pôle de cellule (21) des éléments de contact de pôle de cellule (15) d'au moins un connecteur de pôle de cellule (6) se trouvant dans un plan de mise en contact de pôle de cellule (E) commun, les surfaces de mise en contact de platine (22) d'au moins deux éléments de contact de platine (18) se trouvant dans un plan de mise en contact de platine (P) commun.

5. Système de mise en contact (2) selon au moins l'une des revendications 1 à 4, l'un de segments d'élément jointif (20) comportant une surface de butée (28) destinée à l'appui d'une platine (10) reliée à l'élément de contact de platine (18) ou d'un autre composant du système de mise en contact (2), et/ou l'un de segments d'élément jointif (20) comportant, sur au moins un côté à l'opposé de l'élément de contact de pôle de cellule (15) respectif, au moins un élément d'encliquetage destiné à l'encliquetage d'une ou de la platine (10) reliée à l'élément de contact de platine (18), et
l'élément de contact de platine (18) et/ou l'un de segments d'élément jointif (20) étant en outre configurés et conçus en tant qu'élément(s) porteur(s) pour une ou la platine (10) reliée à l'élément de contact de platine (18).

6. Système de mise en contact (2) selon au moins l'une des revendications 1 à 5, comprenant en outre un cadre porteur (8) auquel est fixé mécaniquement l'au moins un connecteur de pôle de cellule (6),
le connecteur de pôle de cellule (6) comportant un composant de fixation (24) configuré pour la fixation avec le cadre porteur (8), lequel est configuré pour un assemblage par complémentarité de formes et/ou de force avec le cadre porteur (8), le composant de fixation (24) possédant au moins un trou traversant (24) orienté perpendiculairement au plan de mise en contact de pôle de cellule (E), le connecteur de pôle de cellule (6) étant relié au cadre porteur (8) au moyen du trou traversant (24) par un assemblage riveté et/ou un matage (25), et le connecteur de pôle de cellule (6) étant en prise au niveau d'un côté à l'opposé du composant de fixation (24), notamment du trou traversant (24), au moyen d'au moins un élément d'encliquetage (23) configuré sur le cadre porteur (8),
le cadrer porteur (8) possédant un élément support (26) pour au moins un élément de contact de platine (18), comportant au moins une partie saillante de support (26), l'élément de contact de platine (18) s'appuyant sur l'élément support (26) avec un côté à l'opposé de la surface de mise en contact de platine (22) de l'élément de contact de platine (18).

7. Système de mise en contact (2) selon au moins l'une des revendications 1 à 6, comprenant au moins deux rangées de connecteurs de pôle de cellule (9.1, 9.2) comportant respectivement plusieurs connecteurs de pôle de cellule (6) arrangés en étant posés les uns derrière les autres parallèlement à l'axe longitudinal (A) du système de mise en contact (2), les connecteurs de pôle de cellule (6) d'une rangée de connecteurs de pôle de cellule (9.1, 9.2) étant orientés de telle sorte que les lignes de liaison (L) des éléments de contact de pôle de cellule (15) des connecteurs de pôle de cellule (6) sont respectivement orientées parallèlement à l'axe longitudinal de la rangée de connecteurs de pôle de cellule, et/ou
les connecteurs de pôle de cellule (6) d'une rangée de connecteurs de pôle de cellule (9.1, 9.2) étant orientés de telle sorte que l'unité constituée de l'élément jointif de mise en contact (19) et de l'élément de contact de platine (18) s'étend transversalement par rapport à l'axe longitudinal (A) de la rangée de connecteurs de pôle de cellule (9.1, 9.2) et/ou du système de mise en contact (2),
les rangées de connecteurs de pôle de cellule (9.1, 9.2) étant configurées par paires et les connecteurs de pôle de cellule (6) d'une paire de rangées de connecteurs de pôle de cellule (9.1, 9.2) étant orientés de telle sorte que les éléments de contact de platine (18) d'une rangée de connecteurs de pôle de cellule (9.1) font face aux éléments de contact de platine (18) de l'autre rangée de connecteurs de pôle de cellule (9.2) respective,
le système de mise en contact (2) comportant une platine (10) dotée d'une pluralité de contacts de platine, la platine (10) se déployant parallèlement à l'axe longitudinal (A) de la rangée de connecteurs de pôle de cellule (9.1, 9.2) et/ou du système de mise en contact (2) et le nombre de contacts de platine correspondant au nombre d'éléments de contact de platine (18) et chaque contact de platine étant relié électriquement directement à un élément de contact de platine (18),
la platine (10) étant disposée entre deux rangées de connecteurs de pôle de cellule (9.1, 9.2) et les éléments de contact de platine (18) qui font face à la platine (10) étant mis en contact électriquement avec des contacts de platine correspondants.

8. Système de mise en contact (2) selon au moins l'une des revendications 1 à 7, comprenant en outre au moins une interface électrique (13) configurée au niveau d'une extrémité côté long du système de mise en contact (2) .

9. Accumulateur d'énergie (1) comprenant une pluralité de cellules d'accumulation d'énergie (4) qui comportent respectivement des pôles de cellule (5) de polarités opposées et au moins un système de mise en contact (2) selon au moins l'une des revendications 1 à 8,
les pôles de cellule (5) d'au moins une quantité partielle des cellules d'accumulation d'énergie (4) étant interconnectées électriquement au moyen des connecteurs de pôle de cellule (6) du système de mise en contact (2), les surfaces de contact électrique des pôles de cellule (5) interconnectés avec un système de mise en contact (2) étant situés dans un plan de mise en contact de pôle de cellule (E) commun et les surfaces de mise en contact de platine (22) des éléments de contact de platine (18) se trouvant dans un plan de mise en contact de platine (P) commun,
le plan de mise en contact de pôle de cellule (E) et le plan de mise en contact de platine (P) étant disposés réellement en parallèle l'un de l'autre et le plan de mise en contact de platine (P), vu en direction des normales de pôle de cellule (N) des pôles de cellule (5), étant situé au-dessus du plan de mise en contact de pôle de cellule (E).
